# EUROPEAN PATENT APPLICATION

(11) **EP 3 537 352 A1**
(43) Date of publication of application: **11.09.2019**
(21) Application number: 19160244.0
(22) Date of filing: 01.03.2019
(51) Int. Cl.: G06Q 10/06, G06Q 10/00

(54) **ANALYTICS**

(30) Priority: 08.03.2018 US 201862640376 P; 28.12.2018 US 201816235155
(71) Applicant: General Electric Company, Schenectady, NY 12345 (US)
(72) Inventor: Escriche, Lorenzo, Evendale, OH Ohio 45241 (US); TOLEDANO, David Sterling, Niskayuna, NY New York 12309 (US); ABERNATHY, Charles Larry, deceased (US); KLASING, Kevin Samuel, West Chester, OH Ohio 45069 (US); CARPENTER, John Sherrill, Cincinnati, OH Ohio 45215 (US); MALETTA, Paul Anthony, Cincinnati, OH Ohio 45215 (US); KINCAID, William Keith, West Chester, OH Ohio 45069 (US)
(74) Representative: Openshaw & Co.

(57) **Abstract**

An analytics core and/or an analytics core associated with aggregation are presented. For example, a system 100 includes a monitoring component 104, a catalog component 106, a model suite component 108, and a model processing/learning component 110. The monitoring component monitor and analyzed data associated with one or more assets. The catalog component manages analytics associated with the one or more assets, where the catalog component manages a set of models for the one or more assets. The model suite component selects a subset of models from the set of models. The model processing/learning component process the subset of models and performs learning associated with the subset of models to predict a health state for the one or more assets.

## Description

### TECHNICAL FIELD

This disclosure relates generally to asset management systems, and more specifically, to an analytics system for one or more assets.

### BACKGROUND

Managing one or more assets can be burdensome with respect to cost, complexity, time, and/or accuracy. As such, an improved asset management system is desirable.

### SUMMARY

The following presents a simplified summary of the specification in order to provide a basic understanding of some aspects of the specification. This summary is not an extensive overview of the specification. It is intended to neither identify key or critical elements of the specification, nor delineate any scope of the particular implementations of the specification or any scope of the claims. Its sole purpose is to present some concepts of the specification in a simplified form as a prelude to the more detailed description that is presented later.

In accordance with an aspect, a system includes a monitoring component, a catalog component, a model suite component, and a model processing/learning component. The monitoring component monitors and analyzes data associated with one or more assets. The catalog component manages analytics associated with the one or more assets, where the catalog component manages a set of models for the one or more assets. The model suite component selects a subset of models from the set of models. The model processing/learning component process the subset of models and performs learning associated with the subset of models to predict a health state for the one or more assets. In certain aspects, a fly forward component executes a forecasting model to determine a deterministic forecast and/or a probabilistic forecast for the one or more assets. In certain aspects, an inspector aggregation component aggregates the subset of models to determine an optimized model for the one or more assets. In certain aspects, a resource map aggregation component that determines a set of properties associated with aggregation of the subset of models to facilitate service of at least one asset from the one or more assets.

In accordance with another aspect, a method provides for monitoring, by a system comprising a processor, data associated with one or more assets. The method also provides for analyzing, by the system, the one or more assets. Furthermore, the method provides for managing, by the system, analytics associated with the one or more assets, comprising generating a set of models for the one or more assets. The method also provides for selecting, by the system, a subset of models from the set of models. Furthermore, the method provides for performing, by the system, learning associated with the subset of models to predict a health state for the one or more assets. In an aspect, the method also provides for processing, by the system, the subset of models. In certain aspects, the method also provides for executing, by the system, a forecasting model to determine a deterministic forecast and/or a probabilistic forecast for the one or more assets. In certain aspects, the method also provides for aggregating, by the system, the subset of models to determine an optimized model for the one or more assets. In certain aspects, the method also provides for determining, by the system, a set of properties associated with aggregation of the subset of models to facilitate service of at least one asset from the one or more assets.

In accordance with yet another aspect, a computer readable storage device comprising instructions that, in response to execution, cause a system comprising a processor to perform operations, comprising: analyzing one or more assets, managing analytics associated with the one or more assets, comprising generating a set of models for the one or more assets, selecting a subset of models from the set of models, and performing learning associated with the subset of models to predict a health state for the one or more assets. In an aspect, the operations further comprise processing the subset of models. In certain aspects, the operations further comprise executing a forecasting model to determine a deterministic forecast and/or a probabilistic forecast for the one or more assets. In certain aspects, the operations further comprise aggregating the subset of models to determine an optimized model for the one or more assets. In certain aspects, the operations further comprise determining a set of properties associated with aggregation of the subset of models to facilitate service of at least one asset from the one or more assets.

The following description and the annexed drawings set forth certain illustrative aspects of the specification. These aspects are indicative, however, of but a few of the various ways in which the principles of the specification may be employed. Other advantages and novel features of the specification will become apparent from the following detailed description of the specification when considered in conjunction with the drawings.

### BRIEF DESCRIPTION OF THE DRAWINGS

Numerous aspects, implementations, objects and advantages of the present invention will be apparent upon consideration of the following detailed description, taken in conjunction with the accompanying drawings, in which like reference characters refer to like parts throughout, and in which:
FIG. 1 illustrates a high-level block diagram of an example analytics core component, in accordance with one or more aspects and implementations described herein;
FIG. 2 illustrates a high-level block diagram of another example analytics core component, in accordance with one or more aspects and implementations described herein;
FIG. 3 illustrates a high-level block diagram of yet another example analytics core component, in accordance with one or more aspects and implementations described herein;
FIG. 4 illustrates an example architecture for an analytics core, in accordance with one or more aspects and implementations described herein;
FIG. 5 illustrates an example architecture for an analytics core associated with aggregation, in accordance with one or more aspects and implementations described herein;
FIG. 6 illustrates another example architecture for an analytics core associated with aggregation, in accordance with one or more aspects and implementations described herein;
FIG. 7 illustrates an example system, in accordance with one or more aspects and implementations described herein;
FIG. 8 illustrates an example system associated with generation of one or more models for one or more assets, in accordance with one or more aspects and implementations described herein;
FIG. 9 illustrates an example system associated with an analytics network, in accordance with one or more aspects and implementations described herein;
FIG. 10 illustrates an example system associated with an analytics core portion of an analytics network, in accordance with one or more aspects and implementations described herein;
FIG. 11 illustrates an example system associated with an analytics core plus aggregation portion of an analytics network, in accordance with one or more aspects and implementations described herein;
FIG. 12 illustrates an example system associated with analytics core database model processing, in accordance with one or more aspects and implementations described herein;
FIG. 13 illustrates an example system associated with a nesting structure for an analytics core, in accordance with one or more aspects and implementations described herein;
FIG. 14 illustrates an example data structure, in accordance with one or more aspects and implementations described herein;
FIG. 15 illustrates an example graphical user interface, in accordance with one or more aspects and implementations described herein;
FIG. 16 depicts a flow diagram of an example method for facilitating an analytics core and/or aggregation, in accordance with one or more embodiments described herein;
FIG. 17 is a schematic block diagram illustrating a suitable operating environment; and
FIG. 18 is a schematic block diagram of a sample-computing environment.

### DETAILED DESCRIPTION

Various aspects of this disclosure are now described with reference to the drawings, wherein like reference numerals are used to refer to like elements throughout. In the following description, for purposes of explanation, numerous specific details are set forth in order to provide a thorough understanding of one or more aspects. It should be understood, however, that certain aspects of this disclosure may be practiced without these specific details, or with other methods, components, materials, etc. In other instances, well-known structures and devices are shown in block diagram form to facilitate describing one or more aspects.

Systems and techniques that provide an analytics core and/or an analytics core associated with aggregation are presented. For example, as compared to a conventional asset management system that involves human interpretation of digital data with respect to an asset system, the subject innovations provide for a novel analytics core that can improve asset management and/or asset forecasting for one or more assets. In an aspect, consumption of one or more assets (e.g., consumption of usefulness of one or more assets) can be forecasted (e.g., predicted) by generating a set of models that can predict one or more characteristics and/or one or more behaviors for the one or more assets. In one example, an asset can be a combination of parts for one or more machines. In another example, a number of models can correspond to a number of possible failure modes for the one or more assets.

Various systems and techniques disclosed herein can be related to aviation, aircraft, engines, machines, automobiles, water craft, cloud-based services, heating, ventilation and air conditioning (HVAC), medical, water filtration, cooling, pumps, diagnostics, prognostics, optimized machine design factoring in cost of materials in real-time, explicit and implicit training of the models through real-time aggregation of data, and/or one or more other assets.

In an embodiment, a prediction of underlying base data can be generated by an analytics core as disclosed herein. Historical data can be coupled with projected data and/or one or more process analytic models against the sets of data to obtain a continuous view of a health state of one or more assets based on a model suite processed-past, present and forecasted. In an aspect, a configuration input table that defines configuration for one or more assets can be employed at a part and module level. Additionally, health states can be tracked to the part and module level. As such, a processing footprint as compared to conventional asset management systems can be reduced. Furthermore, the analytics core disclosed herein can be highly robust and/or can be an integrated system for delivering forecasting inputs. The analytics core disclosed herein can also manage a high number of analytics against a particular asset. Moreover, the analytics core disclosed herein can be portable and/or incorporated into any existing asset management system. The analytics core disclosed herein can also provide multiple model levels and/or forecasts for enterprise resource planning processing.

In another embodiment, varying model types can be competed (e.g., aggregated) to create a forecast for inspection, removal, and/or repair by an analytics core associated with aggregation as disclosed herein. Multiple tools can be employed to interrogate an analytics database. As such, a tool can satisfy multiple business applications to extract information from an analytics database (e.g., a health state). In an aspect, an analytics core associated with aggregation can include an analytics database, an aggregator and an aggregation manager. The analytics database can contain a set of model outputs in a format that allows the aggregator to compete models accurately and/or consistently. The aggregator can be a tool that performs one or more operations to compete the models. The aggregator can also allow for simulations providing probabilistic forecasts and/or deterministic forecasts. Furthermore, the aggregator can be configured for multiple output types. The aggregation manager can be an instruction set for the aggregator. In an aspect, the aggregation manager can be configurable and/or manageable by a user. As such, with the analytics core associated with the aggregator disclosed herein, complexity with respect to management of an asset system can be reduced. The analytics core associated with the aggregator disclosed herein can also provide a common architecture for an aggregation manager that allows multiple inputs for extracting a forecast. Furthermore, the analytics core associated with the aggregator disclosed herein can be structured to provide a reduced aggregator set and/or rapid configuration for a new aggregation solution. The analytics core associated with the aggregator disclosed herein can also provide improved accuracy and/or improved repeatability as compared to a conventional asset management system.

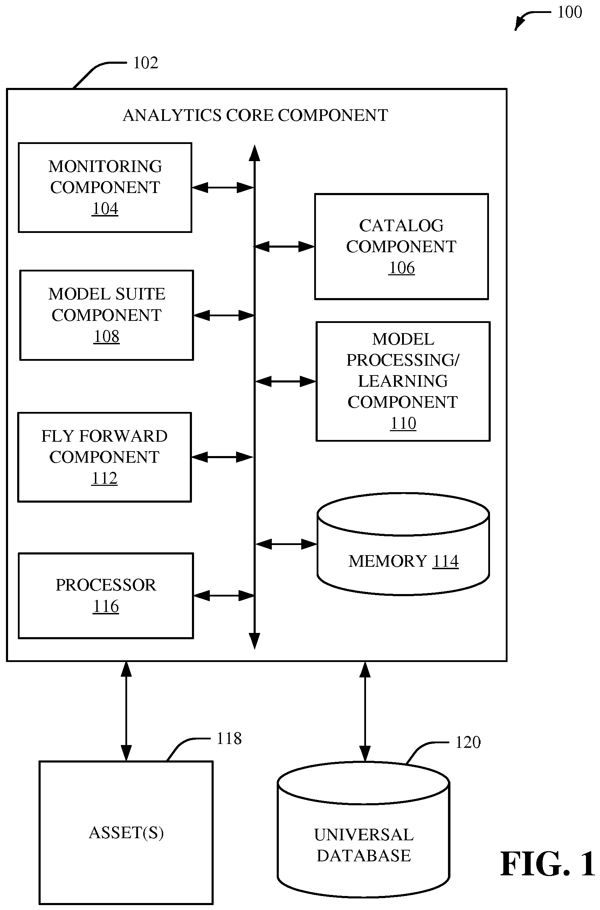

Referring initially to FIG. 1, there is illustrated an example system 100 that provides an analytics core with improved asset management and/or asset forecasting for one or more assets, according to an aspect of the subject disclosure. The system 100 can be employed by various systems, such as, but not limited to asset management systems, asset forecasting systems, modeling systems, aviation systems, power systems, distributed power systems, energy management systems, thermal management systems, transportation systems, oil and gas systems, mechanical systems, machine systems, device systems, cloud-based systems, heating systems, HVAC systems, medical systems, automobile systems, aircraft systems, water craft systems, water filtration systems, cooling systems, pump systems, engine systems, diagnostics systems, prognostics systems, machine design systems, medical device systems, medical imaging systems, medical modeling systems, simulation systems, enterprise systems, enterprise imaging solution systems, advanced diagnostic tool systems, image management platform systems, artificial intelligence systems, machine learning systems, neural network systems, and the like. In one example, the system 100 can be associated with a graphical user interface system to facilitate visualization and/or interpretation of analytics core data. Moreover, the system 100 and/or the components of the system 100 can be employed to use hardware and/or software to solve problems that are highly technical in nature (e.g., related to processing digital data, related to processing analog data that is digitized, related to analyzing digital data, related to modeling digital data, related to artificial intelligence, etc.), that are not abstract and that cannot be performed as a set of mental acts by a human. In one example, the system 100 can be associated with a Platform-as-a-Service (PaaS) system. In another example, the system 100 can be a digital analytics system.

The system 100 can include an analytics core component 102 that can include a monitoring component 104, a catalog component 106, a model suite component 108, a model processing/learning component 110 and/or a fly forward component 112. Aspects of the systems, apparatuses or processes explained in this disclosure can constitute machine-executable component(s) embodied within machine(s), e.g., embodied in one or more computer readable mediums (or media) associated with one or more machines. Such component(s), when executed by the one or more machines, e.g., computer(s), computing device(s), virtual machine(s), etc. can cause the machine(s) to perform the operations described. The system 100 (e.g., the analytics core component 102) can include memory 114 for storing computer executable components and instructions. The system 100 (e.g., the analytics core component 102) can further include a processor 116 to facilitate operation of the instructions (e.g., computer executable components and instructions) by the system 100 (e.g., the analytics core component 102). In certain embodiments, the analytics core component 102 can be in communication with one or more assets 118. In certain embodiments, the system 100 can further include a universal database 120.

The monitoring component 104 can monitor and/or analyze data associated with the one or more assets 118. The one or more assets 118 can include one or more devices, one or more machines and/or one or more pieces of equipment. For example, an asset from the one or more assets 118 can be a device, a machine, equipment, a device element, a machine element, an equipment element, an engine, an engine element, an aircraft, a vehicle, a controller device (e.g., a programmable logic controller), a Supervisory Control And Data Acquisition (SCADA) device, a meter device, a monitoring device (e.g., a remote monitoring device), a network-connected device, a sensor device, a remote terminal unit, a telemetry device, a user interface device (e.g., a human-machine interface device), a historian device, a computing device, another type of asset, etc. In an aspect, the one or more assets 118 can generate digital data.

In an example, the monitoring component 104 can monitor and/or analyze sensor data, process data (e.g., process log data), operational data, monitoring data, maintenance data, parameter data, measurement data, performance data, industrial data, machine data, asset data, equipment data, device data, meter data, real-time data, historical data, audio data, image data, video data, and/or other data associated with the one or more assets 118. In certain embodiments, the one or more assets 118 can also be associated with a vibration detection system, a temperature detection system, a pressure detection system, a flow rate detection system, an electrical current sensor system, a voltage detector system, a heat loading system, an audio system, an image system, a video capturing system, an analog system that converts analog data into digital data, and/or another type of system associated with digital data. In certain embodiments, the one or more assets 118 can be in communication with the analytics core component 102 via a network such as, for example, a communication network, a wireless network, an internet protocol (IP) network, a voice over IP network, an internet telephony network, a mobile telecommunications network and/or another type of network. As such, the monitoring component 104 can monitor and/or analyze data associated with the one or more assets 118 via a network such as, for example, a communication network, a wireless network, an IP network, a voice over IP network, an internet telephony network, a mobile telecommunications network and/or another type of network.

The catalog component 106 can manage analytics associated with the one or more assets 118. For instance, the catalog component 106 can store analytics associated with data provided by the one or more assets 118. In an example, the catalog component 106 can store analytics associated with sensor data, process data (e.g., process log data), operational data, monitoring data, maintenance data, parameter data, measurement data, performance data, industrial data, machine data, asset data, equipment data, device data, meter data, real-time data, historical data, audio data, image data, video data, and/or other data associated with the one or more assets 118. In an aspect, the catalog component 106 can store analytics data associated with the one or more assets 118. In an embodiment, the analytics data can include a set of models associated with the one or more assets 118. For example, the set of models that model analytics associated with sensor data, process data (e.g., process log data), operational data, monitoring data, maintenance data, parameter data, measurement data, performance data, industrial data, machine data, asset data, equipment data, device data, meter data, real-time data, historical data, audio data, image data, video data, and/or other data associated with the one or more assets 118. The catalog component 106 can also provide the analytics data to the model suite component 108. The model suite component 108 can select a subset of models managed by the catalog component 106. In an embodiment, the model suite component 108 can define one or more models for one or more features of the one or more assets 118. For example, the model suite component 108 can select a subset of models managed by the catalog component 106 based on one or more features of the one or more assets 118. In certain embodiments, the model suite component 108 can select a subset of models managed by the catalog component 106 based on a goal associated with probabilistic forecasting and/or deterministic forecasting associated with the one or more assets 118.

The model processing/learning component 110 can process the subset of models with configuration data and/or other data. Additionally or alternatively, the model processing/learning component 110 can perform learning with respect to the subset of models. For instance, the model processing/learning component 110 can learn one or more features and/or information related to the subset of models associated with the one or more assets 118. In an embodiment, the model processing/learning component 110 can employ machine learning and/or principles of artificial intelligence (e.g., a machine learning process) to learn one or more features and/or information related to the subset of models associated with the one or more assets 118. The model processing/learning component 110 can perform learning with respect to learning one or more features and/or information related to the subset of models associated with the one or more assets 118 explicitly or implicitly. In an aspect, the model processing/learning component 110 can learn one or more features and/or information related to the subset of models associated with the one or more assets 118 based on classifications, correlations, inferences and/or expressions associated with principles of artificial intelligence. For instance, the model processing/learning component 110 can employ an automatic classification system and/or an automatic classification process to learn one or more features and/or information related to the subset of models associated with the one or more assets 118. In one example, the model processing/learning component 110 can employ a probabilistic and/or statistical-based analysis to learn and/or generate inferences with respect to the subset of models associated with the one or more assets 118. In an aspect, the model processing/learning component 110 can include an inference component (not shown) that can further enhance automated aspects of the model processing/learning component 110 utilizing in part inference-based schemes to learn one or more features and/or information related to the subset of models associated with the one or more assets 118.

The model processing/learning component 110 can employ any suitable machine-learning based techniques, statistical-based techniques and/or probabilistic-based techniques. For example, the model processing/learning component 110 can employ expert systems, fuzzy logic, SVMs, Hidden Markov Models (HMMs), greedy search algorithms, rule-based systems, Bayesian models (e.g., Bayesian networks), neural networks, other non-linear training techniques, data fusion, utility-based analytical systems, systems employing Bayesian models, etc. In another aspect, the model processing/learning component 110 can perform a set of machine learning computations associated with learning one or more features and/or information related to the subset of models associated with the one or more assets 118. For example, the model processing/learning component 110 can perform a set of clustering machine learning computations, a set of logistic regression machine learning computations, a set of decision tree machine learning computations, a set of random forest machine learning computations, a set of regression tree machine learning computations, a set of least square machine learning computations, a set of instance-based machine learning computations, a set of regression machine learning computations, a set of support vector regression machine learning computations, a set of k-means machine learning computations, a set of spectral clustering machine learning computations, a set of rule learning machine learning computations, a set of Bayesian machine learning computations, a set of deep Boltzmann machine computations, a set of deep belief network computations, and/or a set of different machine learning computations to learn one or more features and/or information related to the subset of models associated with the one or more assets 118.

The fly forward component 112 can execute a forecasting model to determine a deterministic forecast and/or a probabilistic forecast for the one or more assets 118. For instance, the forecasting model executed by the fly forward component 112 can be associated with one or more predicted operational characteristics for the one or more assets 118. In an embodiment, the forecasting model executed by the fly forward component 112 can determine how and/or where the one or more assets 118 were operated historically. Furthermore, the forecasting model executed by the fly forward component 112 can employ the historical operational information to predict one or more future operational conditions leading up to a next maintenance event for the one or more assets 118. For instance, the forecasting model executed by the fly forward component 112 can employ a set of operational parameters (e.g., a set of historical parameters) for the one or more assets 118 to forecast future operational characteristics for the one or more assets 118.

As such, the analytics core component 102 can determine and/or predict a health state for the one or more assets 118. In certain embodiments, data associated with the one or more assets 118 can be stored in the universal database 120. For instance, a health state for the one or more assets 118, a history of the one or more assets 118 and/or one or more forecasts for the one or more assets 118 can be stored in the universal database 120. In certain embodiments, a nesting system for the one or more assets 118 can be generated for multiple parts and/or multiple subsystems associated with the one or more assets 118. In an embodiment, the fly forward component 112 can generate data associated with "forecasted/expected" future operational characteristics for an asset or for each of a number of assets from which a deterministic forecast or probabilistic forecast of a future health state of the asset can be generated. In a non-limiting embodiment, data stored for the forecasting model executed by the fly forward component 112 can include data sets or data types such as, for example, city pair, utilization, asset identification information (e.g., a tail number, etc.), ambient temperature (e.g., average seasonal ambient temperature), parameters generated from an operation of an asset and employed analytics processing, etc. Data stored for the forecasting model executed by the fly forward component 112 can be deterministic and/or probabilistic. For example, initial data for the forecasting model executed by the fly forward component 112 can be deterministic. Furthermore, future data for the forecasting model executed by the fly forward component 112 can include probabilistic results.

The universal database 120 can be associated with one or more use cases such as, for example, inspection forecasting (e.g., during two week intervals, etc.), removal forecasting (e.g., runs on demand, etc.), shop visit forecasting (e.g., during two week intervals, etc.), part stream demands as part of shop visit forecasting, on demand data extraction, on demand data extraction with visualization tools, use as part of what if scenarios (e.g., replicate data base for 5 to 50 instances), etc. In certain embodiments, the universal database 120 can store one or more data elements, store one or more fly forward elements, store model outputs related to a health state, store one or more probabilistic elements, provide estimates for multiple models, store flight by flight elements, track any asset based on historical and/or predicted health state, extract a fleet or group for an asset, extract one or more models into an aggregator in order to determine an inspection, removal, work scope, repair forecast, accommodate asset health state tracking, and/or integrate data with a configuration management system.

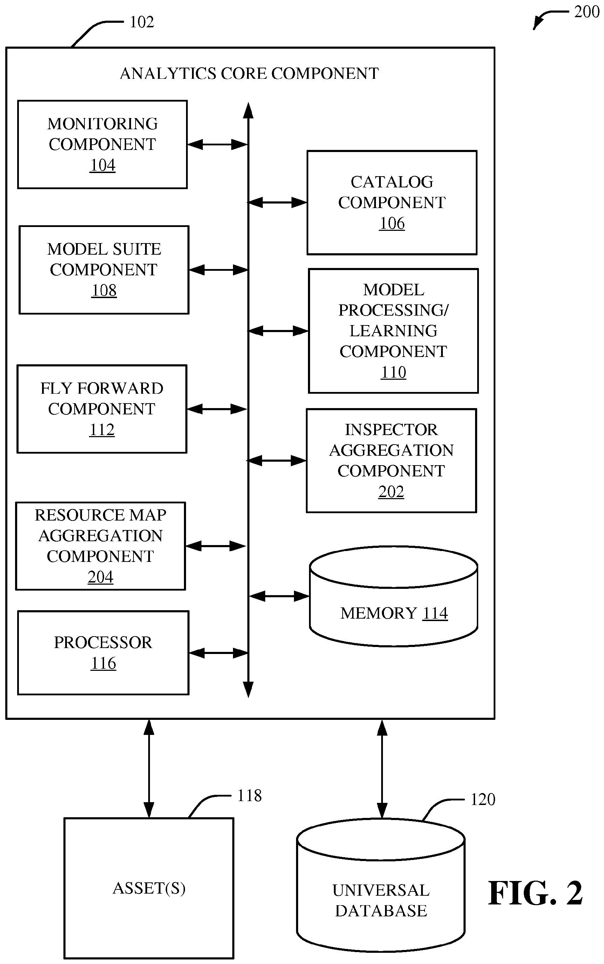

Referring now to FIG. 2, there is illustrated an example system 200 that provides an analytics core associated with aggregation for improved asset management and/or asset forecasting for one or more assets, according to an aspect of the subject disclosure. Repetitive description of like elements employed in other embodiments described herein is omitted for sake of brevity.

The system 200 can include the analytics core component 102. The analytics core component 102 can include the monitoring component 104, the catalog component 106, the model suite component 108, the model processing/learning component 110, the fly forward component 112, an inspector aggregation component 202, a resource map aggregation component 204, the memory 114 and/or the processor 116. In certain embodiments, the system 200 can additionally include the one or more assets 118 and/or the universal database 120.

The inspector aggregation component 202 can compete the subset of models selected by the model suite component 108 to determine an optimized model for the one or more assets 118. For instance, the inspector aggregation component 202 can aggregate (e.g., compete) the subset of models selected by the model suite component 108 to determine an optimized model for the one or more assets 118. In an aspect, the inspector aggregation component 202 can combine one or more models from the subset of models selected by the model suite component 108 to determine an optimized model for the one or more assets 118. In an embodiment, the inspector aggregation component 202 can execute one or more simulations, one or more probabilistic forecasts, and/or one or more deterministic forecasts for the one or more assets 118 to facilitate aggregation of the subset of models. The resource map aggregation component 204 can determine a set of properties associated with aggregation of the subset of models. For example, the resource map aggregation component 204 can determine a set of relationships among the aggregation of the subset of models. In an embodiment, the set of properties can be employed to facilitate servicing one or more assets to, for example, repair a health state of the one or more assets 118.

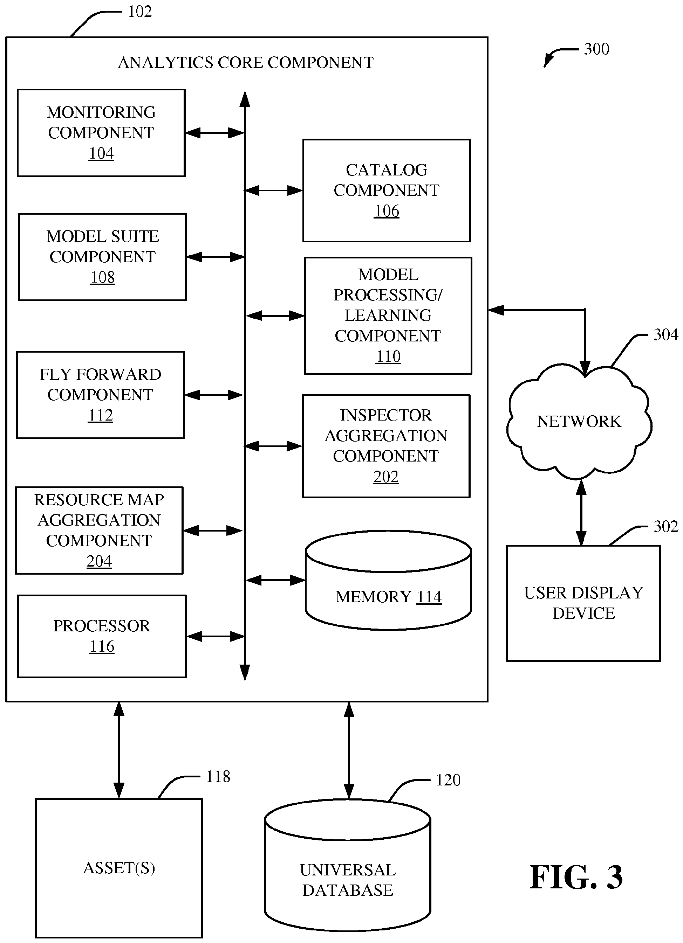

Referring now to FIG. 3, there is illustrated an example system 300 that provides an analytics core associated with aggregation for improved asset management and/or asset forecasting for one or more assets, according to an aspect of the subject disclosure. Repetitive description of like elements employed in other embodiments described herein is omitted for sake of brevity.

The system 300 can include the analytics core component 102. The analytics core component 102 can include the monitoring component 104, the catalog component 106, the model suite component 108, the model processing/learning component 110, the fly forward component 112, the inspector aggregation component 202, the resource map aggregation component 204, the memory 114 and/or the processor 116. In certain embodiments, the system 300 can additionally include the one or more assets 118 and/or the universal database 120. The system 300 can also be associated with a graphical user interface system to facilitate visualization and/or interpretation of analytic core data such as asset management data and/or asset forecasting data. For example, the system 300 can include a user display device 302. The user display device 302 can be in communication with the analytics core component 102 via a network 304. The user display device 302 can provide a display of analytic core data such as asset management data and/or asset forecasting data. For example, the user display device 302 can include a graphical user interface associated with a display. The user display device 302 can be a device with a display such as, but not limited to, a computing device, a computer, a desktop computer, a laptop computer, a monitor device, a smart device, a smart phone, a mobile device, a handheld device, a tablet, a portable computing device or another type of user device associated with a display.

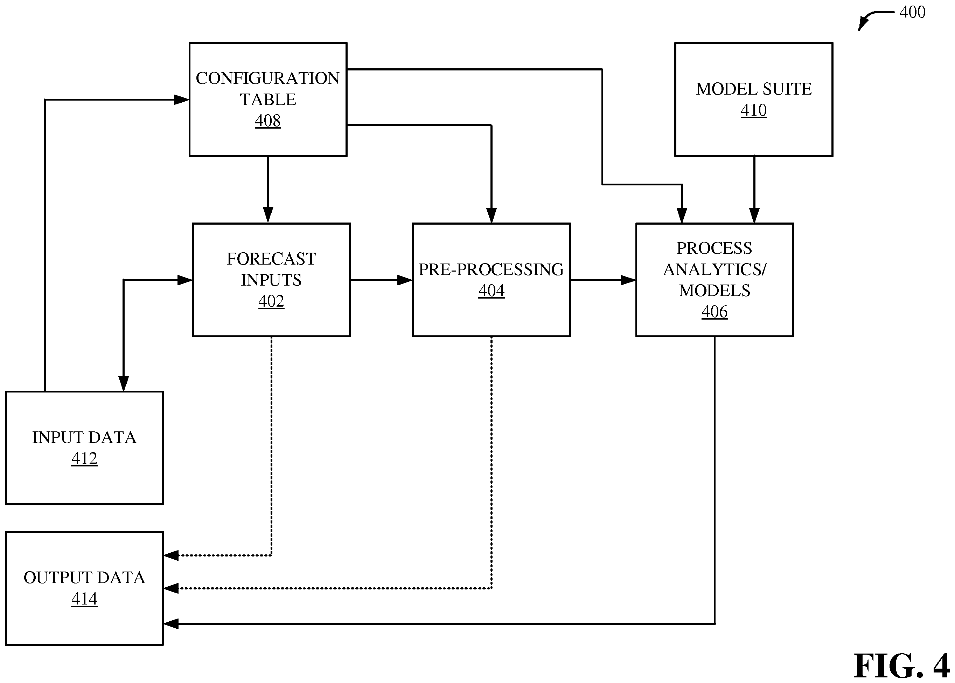

FIG. 4 illustrates an example system 400, in accordance with various aspects and implementations described herein. Repetitive description of like elements employed in other embodiments described herein is omitted for sake of brevity. The system 400 can illustrate an example architecture for an analytics core. In an aspect, the system 400 can be implemented by the analytics core component 102. For instance, the system 400 can be implemented by the monitoring component 104, the catalog component 106, the model suite component 108, the model processing/learning component 110, and/or the fly forward component 112.

The system 400 can include forecast inputs 402, a pre-processing 404, process analytics/models 406, a configuration table 408, a model suite 410, input data 412 and/or output data 414. The system 400 can manage analytics and/or models for one or more assets (e.g., the one or more assets 118). The system 400 can correspond to an analytics core. For example, the system 400 can correspond to one or more functions of the analytics core component 102. The system 400 can also be an integrated system. In an embodiment, the input data 412 can be provided to the configuration table 408. The input data 412 can be, for example, data provided by the one or more assets 118. For example, the input data 412 can include sensor data, process data (e.g., process log data), operational data, monitoring data, maintenance data, parameter data, measurement data, performance data, thermodynamics performance data, industrial data, machine data, asset data, equipment data, device data, meter data, real-time data, historical data, audio data, image data, video data, and/or other data associated with the one or more assets 118. In an aspect, the forecast inputs 402 can be determined based on the input data 412. In certain embodiments, the preprocessing 404 can be performed prior to the process analytics/models 406. The process analytics/models 406 can include processing and/or analysis of one or more models associated with the input data. For example, the process analytics/models 406 can include processing and/or analysis of one or more models associated with the one or more assets 118. The model suite 410 can select a subset of models for processing and/or analysis by the process analytics/models 406. The output data 414 can be generated based on the process analytics/models 406. Additionally or alternatively, the output data 414 can be generated based on the forecast inputs 402 and/or the pre-processing 404. The output data 414 can provide a health state of the one or more assets 118.

In certain embodiments, the input data 412 can include historical data associated with the one or more assets 118 and/or one or more other assets. The historical data can be, for example, a filtered and/or specialized set of historical data. In certain embodiments, the input data 412 can be updated continuously. In an embodiment, the forecast inputs 402 can be a forecasting element that can employ the historical data to develop a future probabilistic model of operation for the one or more assets 118. The future probabilistic model can be a data set that is provided to the process analytics/models 406. The pre-processing 404 can be employed to adjust the forecast (e.g., the future probabilistic model) for one or more characteristics such as, for example, normal deterioration. The model suite 410 can define an analytic set to be applied to the one or more assets 118 based on configuration information for the one or more assets 118. In an aspect, the configuration information for the one or more assets 118 can be stored in the configuration table. Processing can be performed by adding at least a portion of the historical data (e.g., recent historical data) and/or forecasted elements using the model suite 410 and/or the configuration information associated with the configuration table 408. Results can be stored in a database. For example, the output data 414 can include the results. Additionally or alternatively, the output data 414 can include forecasted data that is tagged to separate the forecasted data from the historical data. In certain embodiments, the output data 414 can be synchronized to a serial number, a module, a part, feature information and/or other information associated with the one or more assets 118. The output data 414 can provide health state information for one or more outcome needs for the one or more assets 118 such as inspections, removals, shop overhaul, in-service maintenance, repair tracking and/or another procedure for the one or more assets 118. The health state information included in the output data 414 can be provided through direct read of a database or through an aggregation module. Processing can be streaming or batch and can be scheduled to match timing requirements of the analytics. In certain embodiments, the system 400 can be divided into multiple instances (e.g., nesting) and/or the results can be aggregated through a database. As such, tracking at a system-feature level, a subsystem-feature level, a module-feature level, and/or a part-feature level can be provided by employing the system 400. Furthermore, an improved forecasting function can be provided by employing the system 400. Additionally or alternatively, a reduced processing footprint can be provided by employing the system 400. In an aspect, the system 400 can be probabilistic. The system 400 can also be streaming and batch processing capable. The system 400 can provide optimization and what if scenario processing. The system 400 can also provide a nesting capable design. A feedback loop input can also be provided with the system 400. The system 400 can also accommodate historical elements and forecasting elements.

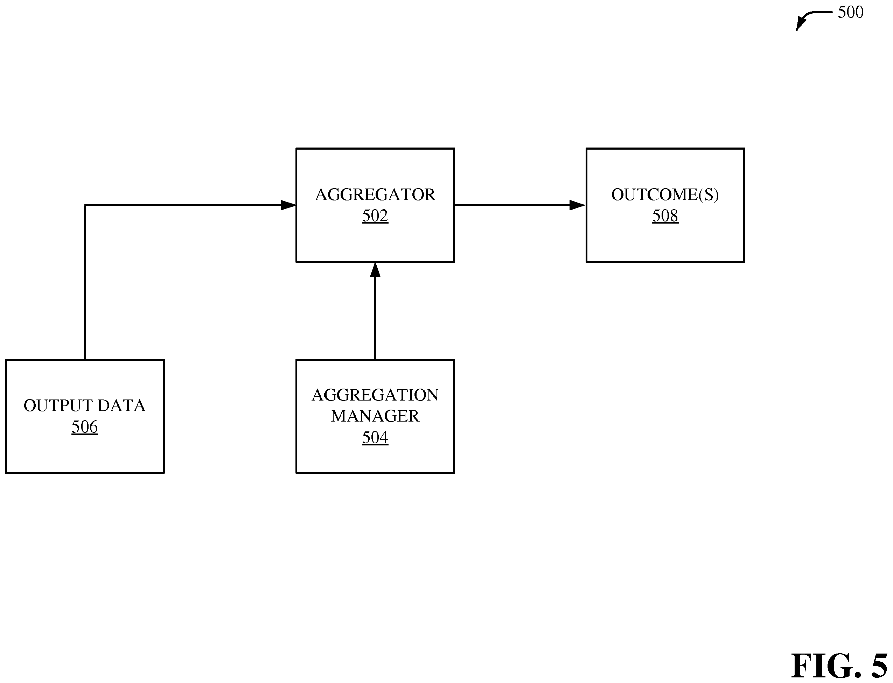

FIG. 5 illustrates an example system 500, in accordance with various aspects and implementations described herein. Repetitive description of like elements employed in other embodiments described herein is omitted for sake of brevity. The system 500 can illustrate an example architecture for an analytics core associated with aggregation. In an aspect, the system 500 can be implemented by the analytics core component 102. For instance, the system 500 can be implemented by the inspector aggregation component 202 and/or the resource map aggregation component 204. The system 500 can include an aggregator 502 and an aggregator manager 504. The aggregator manager 504 can be in communication with the aggregator 502. Furthermore, the aggregator 502 can receive output data 506 and the aggregator 502 can generate one or more outcomes 508. In certain embodiments, the output data 506 can correspond to the output data 414 provided by the process analytics/models 406.

The aggregator 502 can receive the output data 506 that includes, for example, a health state of the one or more assets 118. The aggregator 502 can compete (e.g., aggregate, combine, etc.) models provided by, for example, the process analytics/models 406. For example, the aggregator 502 can compete (e.g., aggregate, combine, etc.) models that include a threshold for forecasts and determine a forecast that completes processing by reaching the threshold in a shortest amount of time. The aggregator 502 can also select an element to forecast. The aggregator manager 504 can define one or more functions for the aggregator 502. In an aspect, the aggregator manager 504 can define a type of machine learning to be performed by the aggregator 502. For example, the aggregator manager 504 can configure the aggregator 502 as a probabilistic aggregator, a Bayesian aggregator, a Monte Carlo aggregator, another type of machine learning aggregator, etc. In another aspect, the aggregator manager 504 can define or determine which assets from the one or more assets 118 to forecast. The aggregator 502 and the aggregator manager 504 can be implemented downstream with respect to the aggregator core associated with FIG. 4. For example, the aggregator 502 and the aggregator manager 504 can employ data (e.g., the output data 414) generated by the aggregator core associated with FIG. 4. In an embodiment, the aggregator 502 can predict N outcomes for the one or more assets 118, where N is an integer. In another embodiment, the aggregator 502 can extract information from the output data 506 to fuse data and/or determine a limiting factor for an asset from the one or more assets 118. For example, the aggregator 502 can extract information from the output data 506 to fuse data and/or determine a removal process for an asset from the one or more assets 118, an inspection process for an asset from the one or more assets 118, a repair process for an asset from the one or more assets 118, a shop visit process for an asset from the one or more assets 118, an in-service maintenance process for an asset from the one or more assets 118, an in-service repair process for an asset from the one or more assets 118, etc. In an embodiment, the one or more outcomes 508 can be one or more predicted outcomes for the one or more assets 118. In an aspect, the system 500 can provide a single aggregation point with multifunction capability. The system 500 can also employ analytics (e.g., a health state for the one or more assets 118) stored in a database (e.g., stored by the output data 506). Aggregation by the system 500 can be externally configurable and/or can be performed without recoding to update. As such, the system 500 can provide traceability and/or point of control for an outcome. Furthermore, with the system 500, multiple aggregation methods can be integrated into a single process. Aggregation by the system 500 can also provide optimization functionality. The system 500 can also provide multi-model types and/or probabilistic processing. Feedback can also be employed in an analytics process with the system 500. The system 500 can also provide aggregation in nested levels.

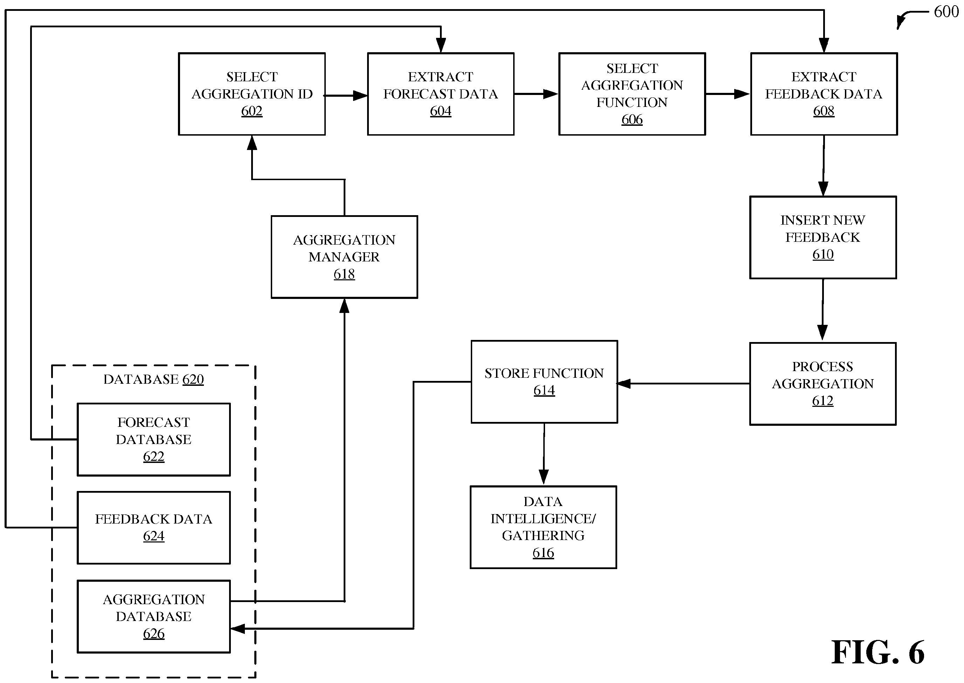

FIG. 6 illustrates an example system 600, in accordance with various aspects and implementations described herein. Repetitive description of like elements employed in other embodiments described herein is omitted for sake of brevity. The system 600 can illustrate an example architecture for an analytics core associated with aggregation. In an aspect, the system 600 can be implemented by the analytics core component 102. For instance, the system 600 can be implemented by the inspector aggregation component 202 and/or the resource map aggregation component 204. Furthermore, the system 600 can illustrate functionality of the aggregator and/or the aggregator manager shown in FIG. 5.

An aggregator (e.g., the aggregator 502) can execute a step 602, a step 604, a step 606, a step 608, a step 610, a step 612, a step 614 and/or a step 616. In an embodiment, to launch an aggregator (e.g., the aggregator 502), an aggregation identifier (ID) can be selected at step 602. For example, an asset ID and/or an aggregation function ID provided by the aggregation manager 618 can be selected. The aggregator (e.g., the aggregator 502) can extract forecast data at step 604. The aggregator (e.g., the aggregator 502) can also select an aggregation function at step 606. For example, the aggregator (e.g., the aggregator 502) can also select an aggregation function such as, for example, a Monte Carlo aggregation function, a deterministic aggregation function, another type of aggregation function, etc. The aggregator (e.g., the aggregator 502) can also extract feedback data at step 608. The feedback data can include, for example, historical data and/or new data. In certain embodiments, the aggregator (e.g., the aggregator 502) can additionally or alternatively insert new feedback at step 610. For example, the aggregator (e.g., the aggregator 502) can apply feedback data on analytics by asset, as needed. Additionally, the aggregator (e.g., the aggregator 502) can process aggregation at step 612. For example, the aggregator (e.g., the aggregator 502) can also assemble aggregation and/or processes. The aggregation and/or processes can be iterative. Furthermore, the aggregator (e.g., the aggregator 502) can execute a store function at step 614. For example, the aggregator (e.g., the aggregator 502) can assemble output data (e.g., the output data 506 or the output data 414) to a database 620. The aggregator (e.g., the aggregator 502) can also perform data intelligence/gathering at step 616. For example, the aggregator (e.g., the aggregator 502) can also assemble output data (e.g., the output data 506 or the output data 414) to data intelligence/gathering. In certain embodiments, feedback data 624 can be employed to adjust a model dynamically. The database 620 can include a forecast database 622, the feedback data 624 and/or an aggregation database 626. In certain embodiments, the aggregation manager 618 can define aggregation processing such as Monte Carlo aggregation processing, deterministic aggregation processing, probabilistic 1 aggregation processing, probabilistic 2 aggregation processing, optimization aggregation processing, etc. The aggregation manager 618 can contain a list of the one or more assets 118. For example, the aggregation manager 618 can include a list that contains asset information, module information, part information, feature information for an asset, etc. The aggregation manager 618 can also contain relevant models and/or analytics associated with the one or more assets 118. Furthermore, the aggregation manager 618 can define one or more feedback loop elements and/or one or more model/analytic adjustment. The aggregation manager 618 can also define processing for an aggregation function such as, for example, a number of iterations, etc. The aggregation manager 618 can also define output data to store in the database 620. Furthermore, the aggregation manager 618 can define output elements for the data intelligence/gathering at step 616.

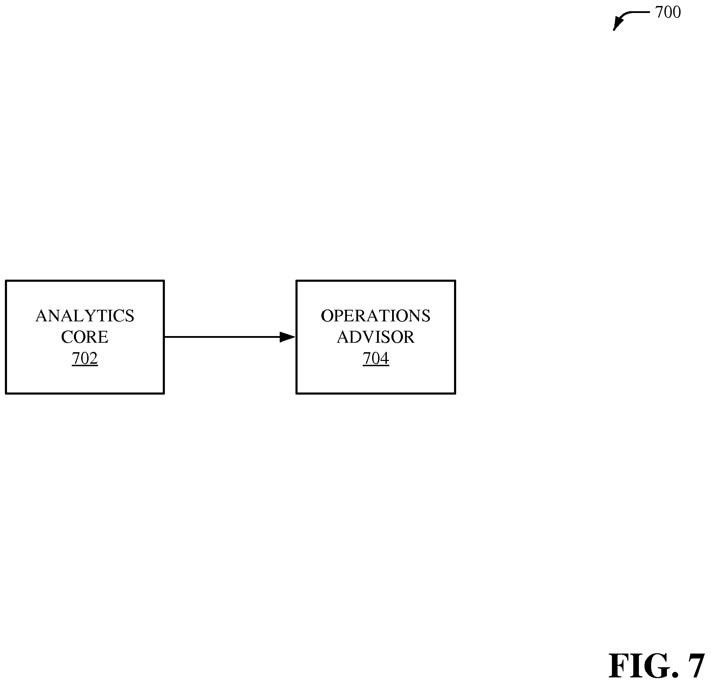

FIG. 7 illustrates an example system 700, in accordance with various aspects and implementations described herein. Repetitive description of like elements employed in other embodiments described herein is omitted for sake of brevity. The system 700 can illustrate, for example, a digital product roadmap. The system 700 includes an analytics core and an operations advisor 704. The analytics core 702 can correspond to at least a portion of the system 400, the system 500 and/or the system 600. The analytics core 702 can provide the operations advisor 704 with information regarding a health state of the one or more assets 118. Based on the heath state of the one or more assets 118 provided by the analytics core 702, the operations advisor 704 can manage digital maintenance for the one or more assets 118, repair of the one or more assets 118, overhaul of the one or more assets 118, one or more processes for the one or more assets 118, one or more modifications to the one or more assets 118, and/or performing one or more operations associated with the one or more assets 118. The operations advisor 704 can also support one or more outcomes associated with the digital maintenance for the one or more assets 118, the repair of the one or more assets 118, the overhaul of the one or more assets 118, the one or more processes for the one or more assets 118, the one or more modifications to the one or more assets 118, and/or the performing one or more operations associated with the one or more assets 118.

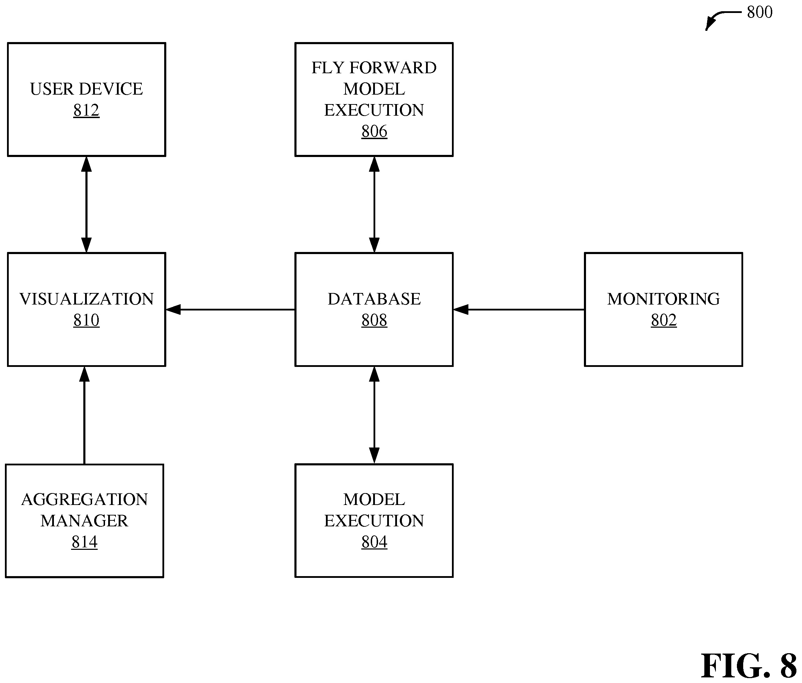

FIG. 8 illustrates an example system 800, in accordance with various aspects and implementations described herein. Repetitive description of like elements employed in other embodiments described herein is omitted for sake of brevity. The system 800 can illustrate generation of one or more models for one or more assets (e.g., the one or more assets 118) to predict a health state for the one or more assets (e.g., the one or more assets 118). The system 800 can include monitoring 802. The monitoring 802 can be associated with the monitoring component 104. For example, the monitoring 802 can monitor and/or analyze data associated with the one or more assets 118. In an aspect, the monitoring 118 can monitor and/or analyze sensor data, process data (e.g., process log data), operational data, monitoring data, maintenance data, parameter data, measurement data, performance data, industrial data, machine data, asset data, equipment data, device data, meter data, real-time data, historical data, audio data, image data, video data, and/or other data associated with the one or more assets 118. In certain embodiments, the monitoring 802 can monitor and/or analyze data associated with the one or more assets 118 via a network such as, for example, a communication network, a wireless network, an IP network, a voice over IP network, an internet telephony network, a mobile telecommunications network and/or another type of network.

The system 800 can additionally or alternatively include model execution 804. The model execution 804 can be associated with the catalog component 106, the model suite component 108 and/or the model processing/learning component 110. The model execution 804 can generate and/or manage one or more models for the one or more assets 118. Furthermore, the model execution 804 can process the one or more models with configuration data and/or other data to facilitate probabilistic forecasting and/or deterministic forecasting associated with the one or more assets 118. In an aspect, the model execution 804 can learn one or more features and/or information related to the one or more models associated with the one or more assets 118. For example, the model execution 804 can employ machine learning and/or principles of artificial intelligence (e.g., a machine learning process) to learn one or more features and/or information related to the one or more models associated with the one or more assets 118.

Additionally or alternatively, the system 800 can include fly forward model execution 806. The fly forward model execution 806 can be associated with the fly forward component 112. For example, the fly forward model execution 806 can execute a forecasting model to determine a deterministic forecast and/or a probabilistic forecast for the one or more assets 118. In an aspect, the forecasting model executed by the fly forward model execution 806 can be associated with one or more predicted operational characteristics for the one or more assets 118. In an embodiment, the forecasting model executed by the fly forward model execution 806 can determine how and/or where the one or more assets 118 were operated historically. Furthermore, the forecasting model executed by the fly forward model execution 806 can employ the historical operational information to predict one or more future operational conditions leading up to a next maintenance event for the one or more assets 118. For instance, the forecasting model executed by the fly forward model execution 806 can employ a set of operational parameters (e.g., a set of historical parameters) for the one or more assets 118 to forecast future operational characteristics for the one or more assets 118. In an embodiment, data associated with the monitoring 802, the model execution 804 and/or the fly forward model execution 806 can be stored in a database 808. In another embodiment, the visualization 810 can provide one or more visualizations for a user device 812 based on data stored in the database 808. For instance, the visualization 810 can provide a graphical user interface associated with data stored in the database 808. The data stored in the database 808 can include analytic core data, asset management data, asset forecasting data, health state data, predicted outcome data and/or other data associated with the monitoring 802, the model execution 804 and/or the fly forward model execution 806. The user device 812 can be a user display device with a display such as, but not limited to, a computing device, a computer, a desktop computer, a laptop computer, a monitor device, a smart device, a smart phone, a mobile device, a handheld device, a tablet, a portable computing device or another type of user device associated with a display. In an aspect, the user device 812 can include a graphical user interface associated with a device that displays the visualization 810. In one example, the user device 812 can correspond to the user display device 302. In certain embodiments, an aggregation manager 814 can facilitate one or more aspects of the visualization 810 provided to the user device 812. For instance, the aggregation manager 814 can be associated with the inspector aggregation component 202 and/or the resource map aggregation component 204. In an aspect, the aggregation manager 814 can aggregate one or more models associated with the model execution 804 and/or the fly forward model execution 806 to generate an optimized model for the one or more assets 118. In certain embodiments, the aggregation manager 814 can execute one or more simulations, one or more probabilistic forecasts, and/or one or more deterministic forecasts for the one or more assets 118 to facilitate generation of the optimized model for the one or more assets 118. In certain embodiments, the visualization 810 can provide information associated with the optimized model for the one or more assets 118.

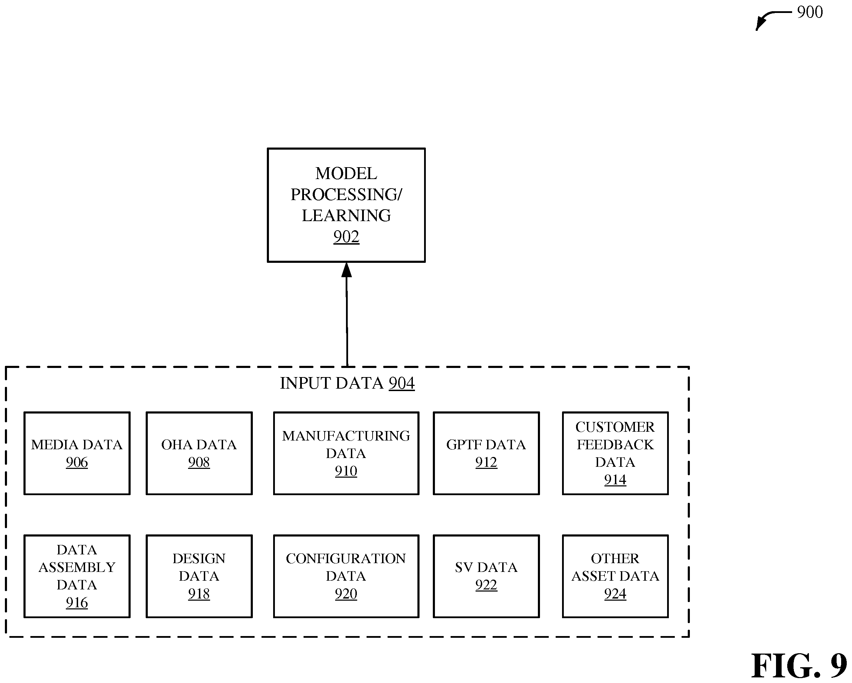

FIG. 9 illustrates an example system 900, in accordance with various aspects and implementations described herein. Repetitive description of like elements employed in other embodiments described herein is omitted for sake of brevity. The system 900 can illustrate at least a portion of an analytics network to facilitate predicting a health state for the one or more assets 118. The system 900 includes model processing/learning 902. The model processing/learning 902 can be associated with the model processing/learning component 110 and/or the process analytics/models 406. The model processing/learning 902 can receive input data 904. The input data 904 can include media data 906, on-wing health advisor (OHA) data 908, manufacturing data 910, gas path tracking filter (GPTF) data 912, customer feedback data 914, data assembly data 916, design data 918, configuration data 920, shop visit (SV) data 922 and/or other asset data 924. The input data 904 can be associated with the one or more assets 118. In certain embodiments, at least a portion of the input data 904 can be obtained by monitoring the one or more assets 118. Furthermore, the model processing/learning 902 can generate and/or manage one or more models for the one or more assets 118 based on the input data 904. For instance, the model processing/learning 902 can process the one or more models with configuration data and/or other data to facilitate probabilistic forecasting and/or deterministic forecasting associated with the one or more assets 118 based on the input data 904. In an aspect, the model processing/learning 902 can learn one or more features and/or information related to the one or more models associated with the one or more assets 118 based on the input data 904. For example, the model processing/learning 902 can employ machine learning and/or principles of artificial intelligence (e.g., a machine learning process) to learn one or more features and/or information related to the one or more models associated with the one or more assets 118 based on the input data 904. In certain embodiments, the model processing/learning 902 can be in communication with a workbench process that can create analytics and/or deploy analytics via a catalog. Additionally or alternatively, the model processing/learning 902 can be in communication with an enterprise work scoping tool that can define shop visits and/or what goes into shop visits. Additionally or alternatively, the model processing/learning 902 can be in communication with an operations advisor that can determine estimates and can provide the estimates to a global shop forecasting tool. The global shop forecasting tool can predict materials for the one or more assets 118. Additionally or alternatively, the model processing/learning 902 can be in communication with a manufacturing/design integrator that can employ and/or provide the manufacturing data 910. The manufacturing data 910 can additionally or alternatively be provided to one or more design tools associated with an operations advisor (e.g., the operations advisor 704) to adjust one or more models for the one or more assets 118. In an embodiment, the model processing/learning 902 can include a data fusion (e.g., a model fuser) that can be applied to one or more models generated by the model processing/learning 902. The data fusion (e.g., a model fuser) associated with the model processing/learning 902 can, for example, learn one or more interdependencies among one or more models generated by the model processing/learning 902. In certain embodiments, a hierarchy of the interdependencies among one or more models generated by the model processing/learning 902 can be created. Furthermore, multiple models associated with the model processing/learning 902 can be leveraged to provide improved and accurate predictions. In certain embodiments, at least a portion of features associated with the one or more models provided by the model processing/learning 902 can be independent. The one or more models provided by the model processing/learning 902 can also be employed to determined when a failure reaches a distress condition threshold or a particular health state associated with the one or more assets 118. Additionally or alternatively, the one or more models provided by the model processing/learning 902 can also be employed to determined when the one or more assets 118 are associated with a particular health state.

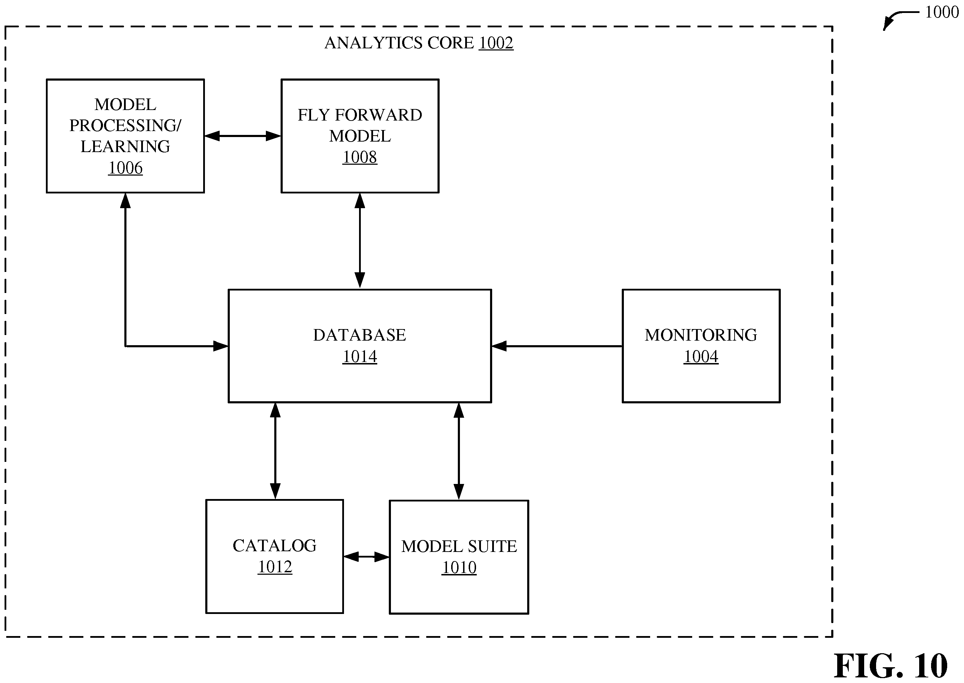

FIG. 10 illustrates an example system 1000, in accordance with various aspects and implementations described herein. Repetitive description of like elements employed in other embodiments described herein is omitted for sake of brevity. The system 1000 can illustrate an analytics core 1002 of an analytics network to facilitate predicting a health state for the one or more assets 118. The analytics core 1002 can include monitoring 1004, model processing/learning 1006 and/or a fly forward model 1008. The monitoring 1004 can be associated with the monitoring component 104. For example, the monitoring 1004 can monitor and/or analyze data associated with the one or more assets 118. In an aspect, the monitoring 1004 can monitor and/or analyze sensor data, process data (e.g., process log data), operational data, monitoring data, maintenance data, parameter data, measurement data, performance data, industrial data, machine data, asset data, equipment data, device data, meter data, real-time data, historical data, audio data, image data, video data, and/or other data associated with the one or more assets 118. In certain embodiments, the monitoring 1004 can monitor and/or analyze data associated with the one or more assets 118 via a network such as, for example, a communication network, a wireless network, an IP network, a voice over IP network, an internet telephony network, a mobile telecommunications network and/or another type of network.

The model processing/learning 1006 can be associated with the model processing/learning component 110, the process analytics/models 406 and/or the model processing/learning 902. The model processing/learning 1006 can generate and/or manage one or more models for the one or more assets 118 based on the monitoring 1004, the fly forward model 1008, the model suite 1010, the catalog 1012, and/or data included in the database 1014. For instance, the model processing/learning 1006 can process the one or more models with configuration data and/or other data to facilitate probabilistic forecasting and/or deterministic forecasting associated with the one or more assets 118 based on the monitoring 1004, the fly forward model 1008, the model suite 1010, the catalog 1012, and/or data included in the database 1014. In an aspect, the model processing/learning 1006 can learn one or more features and/or information related to the one or more models associated with the one or more assets 118 based on the monitoring 1004, the fly forward model 1008, the model suite 1010, the catalog 1012, and/or data included in the database 1014. For example, the model processing/learning 1006 can employ machine learning and/or principles of artificial intelligence (e.g., a machine learning process) to learn one or more features and/or information related to the one or more models associated with the one or more assets 118 based on the monitoring 1004, the fly forward model 1008, the model suite 1010, the catalog 1012, and/or data included in the database 1014. The one or more models provided by the model processing/learning 1006 can also be employed to determined when a failure reaches a distress condition threshold associated with the one or more assets 118. Additionally or alternatively, the one or more models provided by the model processing/learning 1006 can also be employed to determined when the one or more assets 118 are associated with a particular health state.

The fly forward model 1008 can be a forecasting model to determine a deterministic forecast and/or a probabilistic forecast for the one or more assets 118. In an aspect, the fly forward model 1008 can be associated with one or more predicted operational characteristics for the one or more assets 118. In an embodiment, the fly forward model 1008 can determine how and/or where the one or more assets 118 were operated historically. Furthermore, the fly forward model 1008 can employ the historical operational information to predict one or more future operational conditions leading up to a next maintenance event for the one or more assets 118. For instance, the fly forward model 1008 can employ a set of operational parameters (e.g., a set of historical parameters) for the one or more assets 118 to forecast future operational characteristics for the one or more assets 118. The model suite 1010 can select a subset of models for processing and/or analysis by the model processing/learning 1006. For example, the model suite 1010 can select a subset of models from the catalog 1012 that can include a set of models.

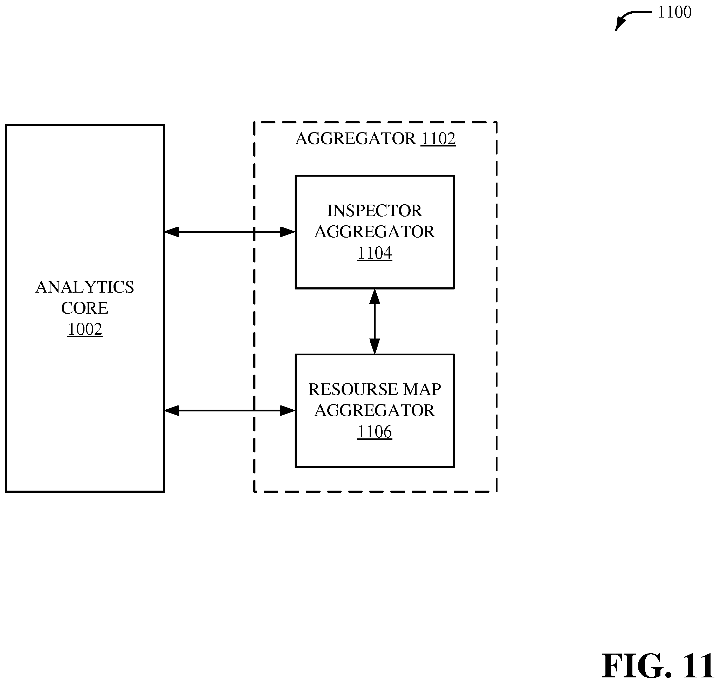

FIG. 11 illustrates an example system 1100, in accordance with various aspects and implementations described herein. Repetitive description of like elements employed in other embodiments described herein is omitted for sake of brevity. The system 1100 can include the analytics core 1002 and an aggregator 1102 to facilitate predicting a health state for the one or more assets 118. The aggregator 1102 can include an inspector aggregator 1104 and/or a resource map aggregator 1106. For example, the inspector aggregator 1104 can correspond to the inspector aggregation component 202 and/or the resource map aggregator 1106 can correspond to the resource map aggregation component 204. The inspector aggregator 1104 can compete a subset of models selected by the analytics core 1002 to determine an optimized model for the one or more assets 118. For instance, the inspector aggregator 1104 can aggregate (e.g., compete) a subset of models selected by analytics core 1002 to determine an optimized model for the one or more assets 118. In an aspect, the inspector aggregator 1104 can combine one or more models from the subset of models selected by the analytics core 1002 to determine an optimized model for the one or more assets 118. In an embodiment, the inspector aggregator 1104 can execute one or more simulations, one or more probabilistic forecasts, and/or one or more deterministic forecasts for the one or more assets 118 to facilitate aggregation of a subset of models. The resource map aggregator 1106 can determine a set of properties associated with aggregation of the subset of models. For example, the resource map aggregator 1106 can determine a set of relationships among the aggregation of the subset of models. In an embodiment, the set of properties can be employed to facilitate servicing one or more assets to, for example, repair a health state of the one or more assets 118.

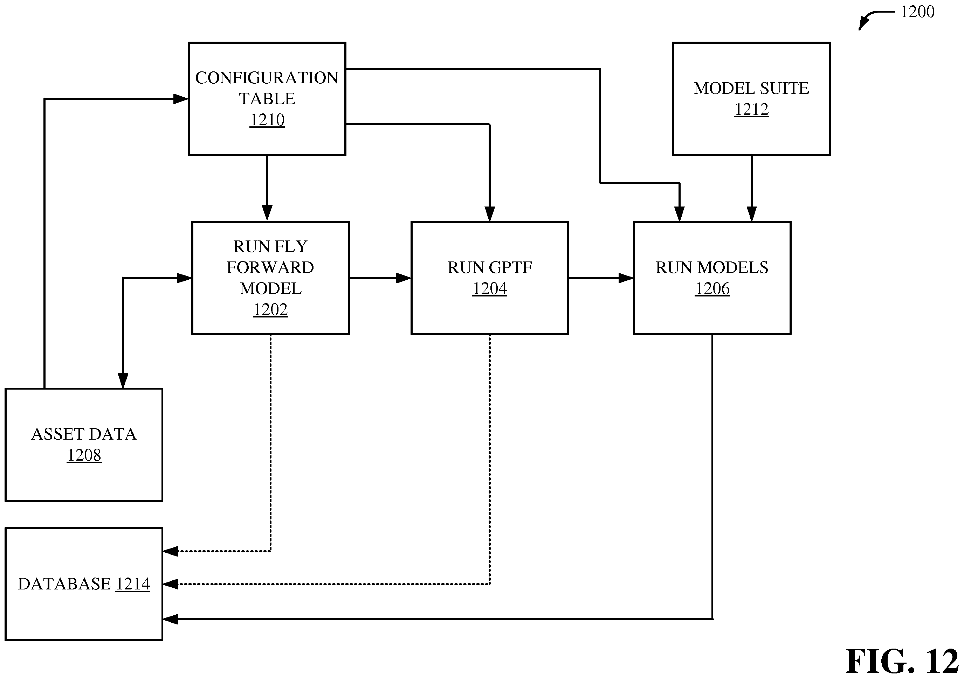

FIG. 12 illustrates an example system 1200, in accordance with various aspects and implementations described herein. Repetitive description of like elements employed in other embodiments described herein is omitted for sake of brevity. The system 1200 can illustrate analytics core database model processing. The system 1200 can include a process 1202 to run a fly forward model, a process 1204 to run a gas path tracking filter (GPTF) and/or a process 1206 to run one or more models. The process 1202 can execute the fly forward model based on asset data 1208 and/or information included in a configuration table 1210. The asset data 1208 can include data associated with the one or more assets 118. For example, the asset data 1208 can include sensor data, process data (e.g., process log data), operational data, monitoring data, maintenance data, parameter data, measurement data, performance data, industrial data, machine data, asset data, equipment data, device data, meter data, real-time data, historical data, audio data, image data, video data, and/or other data associated with the one or more assets 118. The configuration table 1210 can include configuration information associated with the one or more assets 118. Additionally, the process 1204 can execute the GPTF based on asset data 1208 and/or information included in a configuration table 1210. Furthermore, the process 1206 can determine the one or more models based on the asset data 1208, the fly forward model, the GPTF, the configuration table 1210 and/or a model suite 1212. The model suite 1212 can select one or more models for processing and/or analysis by the process 12016. In addition, output generated by the process 1202, the process 1204 and/or the process 1206 can be stored in a database 1214. For example, the database 1214 can store a fly forward model, data associated with GPTF, one or more models associated with one or more predictions for the one or more assets 118, etc. In an embodiment, the database 1214 can include one or more process analytics/models 406 determined by the process 1206. Additionally or alternatively, the database 1214 can include a health state of the one or more assets 118 determined based on the process 1202, the process 1204 and/or the process 1206.

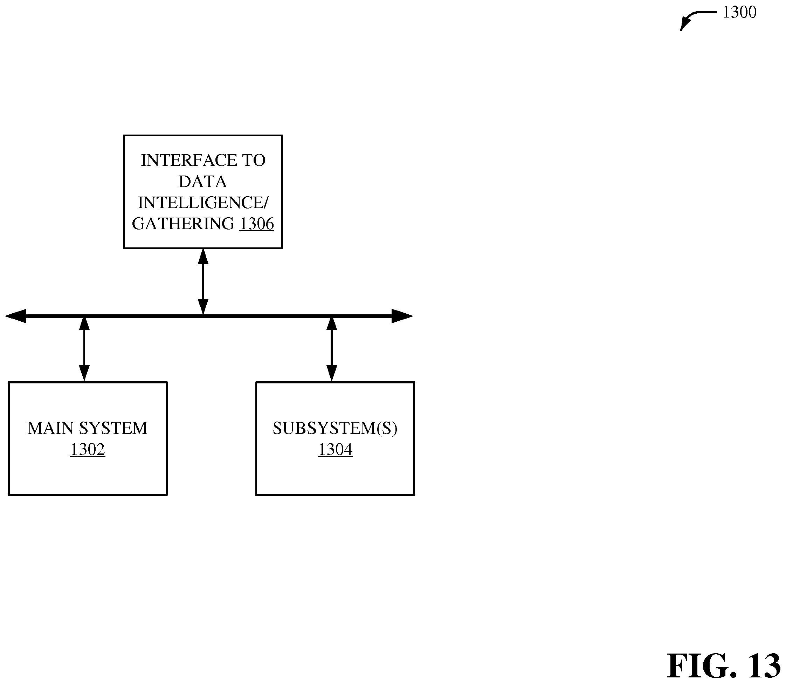

FIG. 13 illustrates an example system 1300, in accordance with various aspects and implementations described herein. Repetitive description of like elements employed in other embodiments described herein is omitted for sake of brevity. The system 1300 can illustrate a nesting structure for an analytics core. For example, a main system 1302 can be nested as a set of subsystems 1304 with unique analytics core processing. In an embodiment, the system 1300 can be divided into multiple instances (e.g., a nesting) and the results can be aggregated through a database. In another embodiment, data associated with unique analytics core processing by the main system 1302 and/or the set of subsystems 1304 can be transmitted to an interface to data intelligence/gathering 1306.

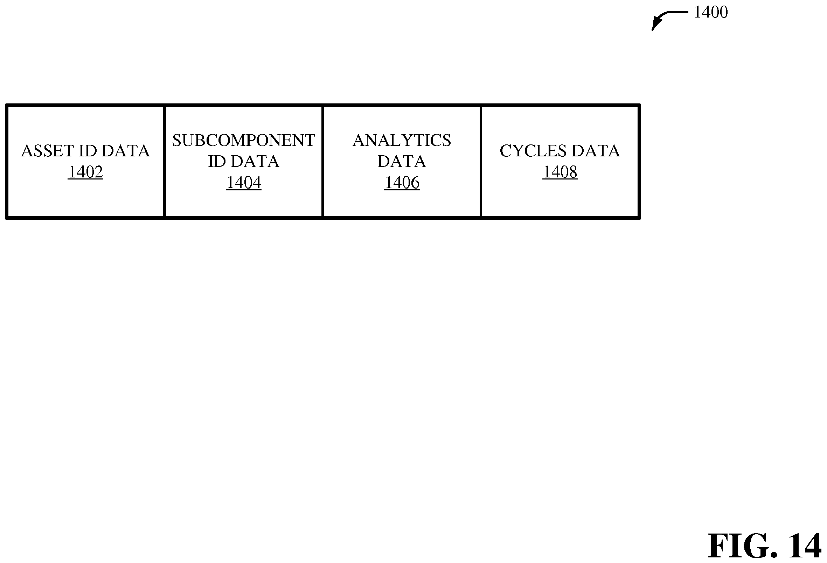

FIG. 14 illustrates an example data structure 1400, in accordance with various aspects and implementations described herein. Repetitive description of like elements employed in other embodiments described herein is omitted for sake of brevity. The data structure 1400 can provide analytic data for plotting trends (e.g., historical trends and/or further trends). In an embodiment, the data structure 1400 can be down sampled to a maximum value per day to provide a data structure with a reduced data size. In an aspect, the data structure 1400 can provide aggregate data for a current asset status (e.g., a current engine status for an aircraft, etc.). In a non-limiting embodiment, the data structure 1400 can include asset ID data 1402, subcomponent ID data 1404, analytics data 1406 and/or cycles data 1408. The asset ID data 1402 can include one or more identifiers for one or more assets. For example, the asset ID data 140 can include one or more identifiers for one or more aircrafts and/or one or more other assets. The subcomponent ID data 1404 can include one or more identifiers for one or more subcomponents of one or more assets. For example, the subcomponent ID data 1404 can include one or more identifiers for one or more engines for one or more aircrafts. The analytics data 1406 can include analytic information for one or more assets and/or one or more subcomponents associated with the asset ID data 1402 and/or the subcomponent ID data 1404. For example, the analytics data 1406 can include analytic information determined by an analytics core, as more fully disclosed herein. The cycles data 1408 can include a number of cycles (e.g., an age indicator) for one or more assets and/or one or more subcomponents associated with the asset ID data 1402 and/or the subcomponent ID data 1404.

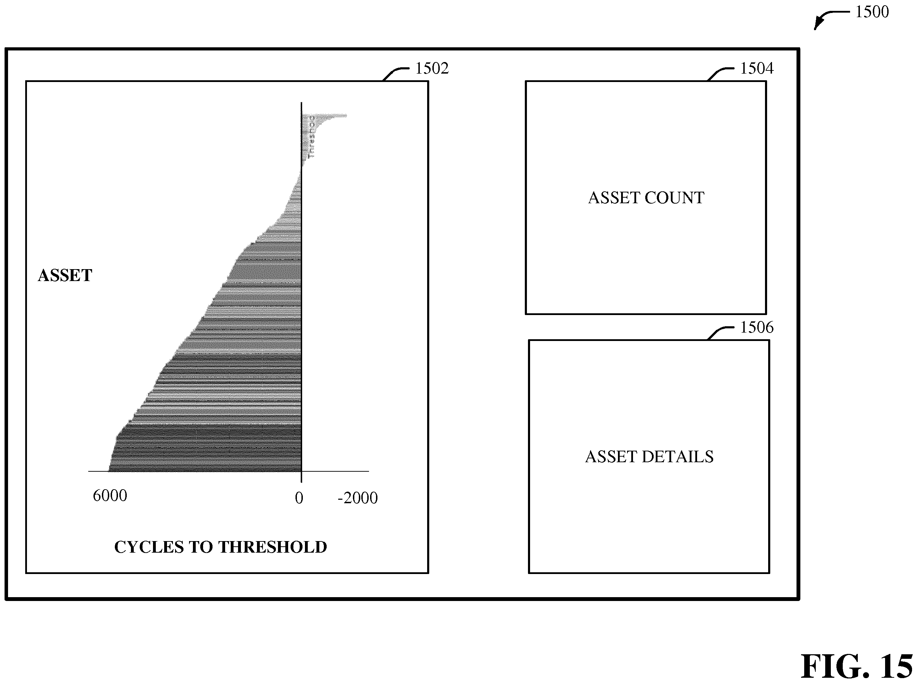

FIG. 15 illustrates an example graphical user interface 1500, in accordance with various aspects and implementations described herein. Repetitive description of like elements employed in other embodiments described herein is omitted for sake of brevity. The graphical user interface 1500 can be displayed on the user display device 302, for example. In an aspect, the graphical user interface 1500 can display analytic core data such as asset management data and/or asset forecasting data for one or more assets in a graphical format and/or a human interpretable format. For instance, the graphical user interface 1500 can include a section 1502 that provides analytic core data such as asset management data and/or asset forecasting data for one or more assets in a graphical format and/or a human interpretable format. In an example, the section 1502 can include cycles to threshold information by asset (e.g., cycles to threshold information by engine serial number). Additionally, the graphical user interface 1500 can include a section 1504 that provides an asset count and/or other information for one or more assets associated with the analytics core data included in the section 1502. Additionally or alternatively, the graphical user interface 1500 can include a section 1506 that provides asset details and/or other information for one or more assets associated with the analytics core data included in the section 1502. However, it is to be appreciated that, in certain embodiments, the graphical user interface 1500 can include other information and/or other graphical elements to facilitate asset management and/or asset forecasting for one or more assets.

The aforementioned systems and/or devices have been described with respect to interaction between several components. It should be appreciated that such systems and components can include those components or sub-components specified therein, some of the specified components or sub-components, and/or additional components. Sub-components could also be implemented as components communicatively coupled to other components rather than included within parent components. Further yet, one or more components and/or sub-components may be combined into a single component providing aggregate functionality. The components may also interact with one or more other components not specifically described herein for the sake of brevity, but known by those of skill in the art.

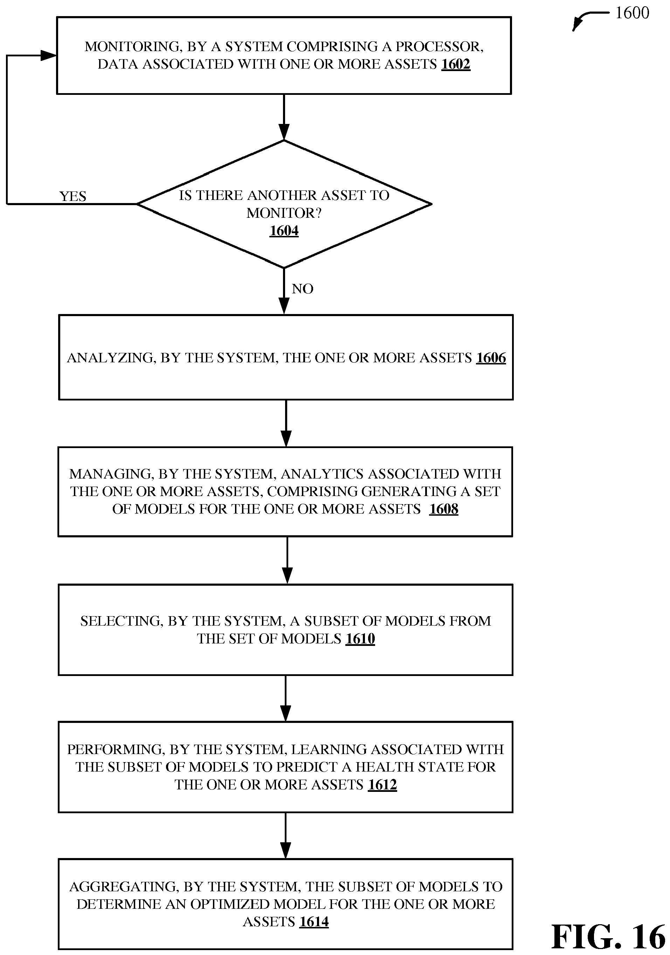

Figure 16 illustrates a methodology and/or flow diagram in accordance with the disclosed subject matter. For simplicity of explanation, the methodology is depicted and described as a series of acts. It is to be understood and appreciated that the subject innovation is not limited by the acts illustrated and/or by the order of acts, for example acts can occur in various orders and/or concurrently, and with other acts not presented and described herein. Furthermore, not all illustrated acts may be required to implement the methodology in accordance with the disclosed subject matter. In addition, those skilled in the art will understand and appreciate that the methodology could alternatively be represented as a series of interrelated states *via* a state diagram or events. Additionally, it should be further appreciated that the methodology disclosed hereinafter and throughout this specification are capable of being stored on an article of manufacture to facilitate transporting and transferring such methodologies to computers. The term article of manufacture, as used herein, is intended to encompass a computer program accessible from any computer-readable device or storage media.

Referring to FIG. 16, there illustrated is a methodology 1600 for facilitating an analytics core and/or aggregation, in accordance with one or more embodiments described herein. As an example, the methodology 1600 can be utilized in various applications, such as, but not limited to, asset management systems, asset forecasting systems, modeling systems, aviation systems, power systems, distributed power systems, energy management systems, thermal management systems, transportation systems, oil and gas systems, mechanical systems, machine systems, device systems, cloud-based systems, heating systems, HVAC systems, medical systems, automobile systems, aircraft systems, water craft systems, water filtration systems, cooling systems, pump systems, engine systems, diagnostics systems, prognostics systems, machine design systems, medical device systems, medical imaging systems, medical modeling systems, simulation systems, enterprise systems, enterprise imaging solution systems, advanced diagnostic tool systems, image management platform systems, artificial intelligence systems, machine learning systems, neural network systems, etc. At 1602, data associated with one or more assets is monitored by a system comprising a processor (e.g., by monitoring component 104). At 1604, it is determined whether there is another asset to monitor. If yes, the methodology returns to 1602. If no, the methodology proceeds to 1606. At 1606, the one or more assets are analyzed by the system (e.g., by monitoring component 104). At 1608, analytics associated with the one or more assets is managed by the system (e.g., by catalog component 106), and a set of models for the one or more assets is generated (e.g., by catalog component 106). At 1610, a subset of models from the set of models is selected by the system (e.g., by model suite component 108). At 1612, learning associated with the subset of models is performed, by the system (e.g., by model processing/learning component 110), to predict a health state for the one or more assets. At 1614, the subset of models is aggregated, by the system (e.g., by an inspector aggregation component 202) to determine an optimized model for the one or more assets. In certain embodiments, the methodology 1600 can additionally or alternatively include processing, by the system, the subset of models. In certain embodiments, the methodology 1600 can additionally or alternatively include executing, by the system, a forecasting model to determine a deterministic forecast and/or a probabilistic forecast for the one or more assets. In certain embodiments, the methodology 1600 can additionally or alternatively include determining, by the system, a set of properties associated with aggregation of the subset of models to facilitate service of at least one asset from the one or more assets. In certain embodiments, the methodology 1600 can additionally or alternatively include defining, by the system, one or more models for one or more features of the one or more assets.

The aforementioned systems and/or devices have been described with respect to interaction between several components. It should be appreciated that such systems and components can include those components or sub-components specified therein, some of the specified components or sub-components, and/or additional components. Sub-components could also be implemented as components communicatively coupled to other components rather than included within parent components. Further yet, one or more components and/or sub-components may be combined into a single component providing aggregate functionality. The components may also interact with one or more other components not specifically described herein for the sake of brevity, but known by those of skill in the art.

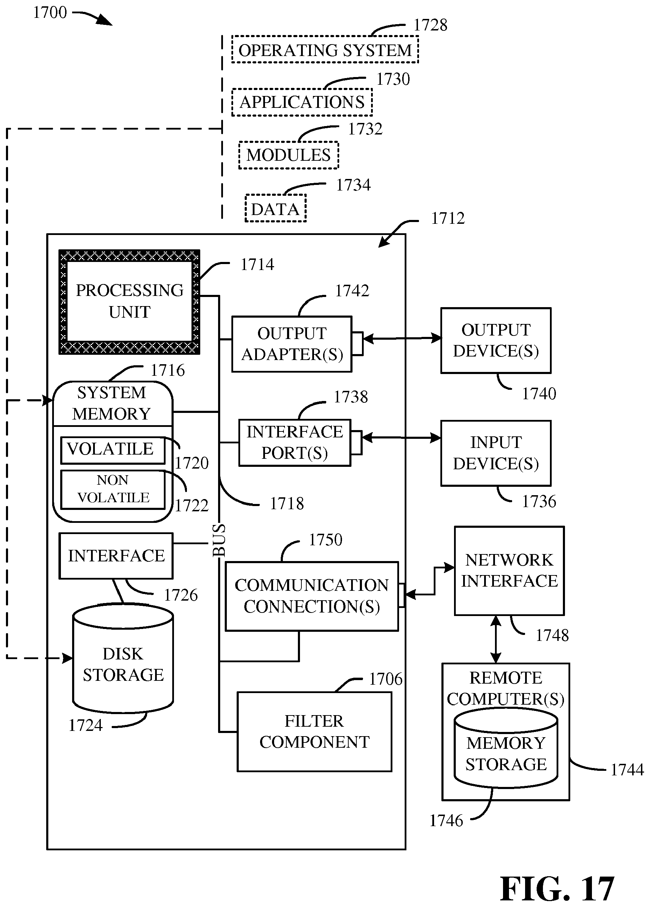

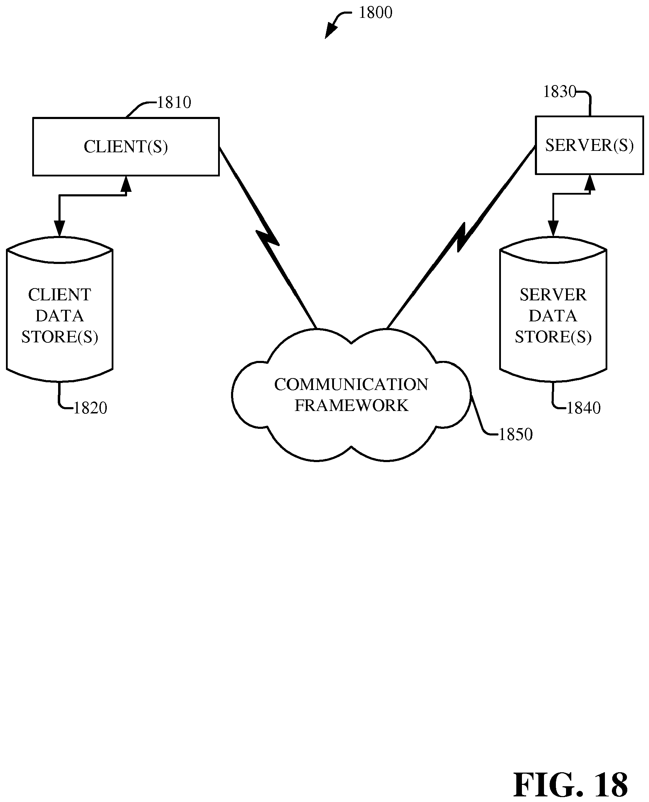

In order to provide a context for the various aspects of the disclosed subject matter, FIGS. 17 and 18 as well as the following discussion are intended to provide a brief, general description of a suitable environment in which the various aspects of the disclosed subject matter may be implemented.

With reference to FIG. 17, a suitable environment 1700 for implementing various aspects of this disclosure includes a computer 1712. The computer 1712 includes a processing unit 1714, a system memory 1716, and a system bus 1718. The system bus 1718 couples system components including, but not limited to, the system memory 1716 to the processing unit 1714. The processing unit 1714 can be any of various available processors. Dual microprocessors and other multiprocessor architectures also can be employed as the processing unit 1714.

The system bus 1718 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1394), and Small Computer Systems Interface (SCSI).

The system memory 1716 includes volatile memory 1720 and nonvolatile memory 1722. The basic input/output system (BIOS), containing the basic routines to transfer information between elements within the computer 1712, such as during start-up, is stored in nonvolatile memory 1722. By way of illustration, and not limitation, nonvolatile memory 1722 can include read only memory (ROM), programmable ROM (PROM), electrically programmable ROM (EPROM), electrically erasable programmable ROM (EEPROM), flash memory, or nonvolatile random access memory (RAM) (e.g., ferroelectric RAM (FeRAM). Volatile memory 1720 includes random access memory (RAM), which acts as external cache memory. By way of illustration and not limitation, RAM is available in many forms such as static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM.

Computer 1712 also includes removable/non-removable, volatile/non-volatile computer storage media. FIG. 17 illustrates, for example, a disk storage 1724. Disk storage 1724 includes, but is not limited to, devices like a Solid State Drive (SSD), a magnetic disk drive, floppy disk drive, tape drive, Jaz drive, Zip drive, LS-100 drive, flash memory card, or memory stick. The disk storage 1724 also can include storage media separately or in combination with other storage media including, but not limited to, an optical disk drive such as a Blu-ray disc writable drive (BD-R), a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 1724 to the system bus 1718, a removable or non-removable interface is typically used, such as interface 1726.

FIG. 17 also depicts software that acts as an intermediary between users and the basic computer resources described in the suitable operating environment 1700. Such software includes, for example, an operating system 1728. Operating system 1728, which can be stored on disk storage 1724, acts to control and allocate resources of the computer system 1712. System applications 1730 take advantage of the management of resources by operating system 1728 through program modules 1732 and program data 1734, e.g., stored either in system memory 1716 or on disk storage 1724. It is to be appreciated that this disclosure can be implemented with various operating systems or combinations of operating systems.

A user enters commands or information into the computer 1712 through input device(s) 1736. Input devices 1736 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 1714 through the system bus 1718 via interface port(s) 1738. Interface port(s) 1738 include, for example, a serial port, a parallel port, a game port, and a universal serial bus (USB). Output device(s) 1740 use some of the same type of ports as input device(s) 1736. Thus, for example, a USB port may be used to provide input to computer 1712, and to output information from computer 1712 to an output device 1740. Output adapter 1742 is provided to illustrate that there are some output devices 1740 like monitors, speakers, and printers, among other output devices 1740, which require special adapters. The output adapters 1742 include, by way of illustration and not limitation, video and sound cards that provide a means of connection between the output device 1740 and the system bus 1718. It should be noted that other devices and/or systems of devices provide both input and output capabilities such as remote computer(s) 1744.

Computer 1712 can operate in a networked environment using logical connections to one or more remote computers, such as remote computer(s) 1744. The remote computer(s) 1744 can be a personal computer, a server, a router, a network PC, a workstation, a microprocessor-based appliance, a peer device or other common network node and the like, and typically includes many or all of the elements described relative to computer 1712. For purposes of brevity, only a memory storage device 1746 is illustrated with remote computer(s) 1744. Remote computer(s) 1744 is logically connected to computer 1712 through a network interface 1748 and then physically connected via communication connection 1750. Network interface 1748 encompasses wire and/or wireless communication networks such as local-area networks (LAN), wide-area networks (WAN), cellular networks, etc. LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 1750 refers to the hardware/software employed to connect the network interface 1748 to the bus 1718. While communication connection 1750 is shown for illustrative clarity inside computer 1712, it can also be external to computer 1712. The hardware/software necessary for connection to the network interface 1748 includes, for exemplary purposes only, internal and external technologies such as, modems including regular telephone grade modems, cable modems and DSL modems, ISDN adapters, and Ethernet cards.

FIG. 18 is a schematic block diagram of a sample-computing environment 1800 with which the subject matter of this disclosure can interact. The system 1800 includes one or more client(s) 1810. The client(s) 1810 can be hardware and/or software (e.g., threads, processes, computing devices). The system 1800 also includes one or more server(s) 1830. Thus, system 1800 can correspond to a two-tier client server model or a multi-tier model (e.g., client, middle tier server, data server), amongst other models. The server(s) 1830 can also be hardware and/or software (e.g., threads, processes, computing devices). The servers 1830 can house threads to perform transformations by employing this disclosure, for example. One possible communication between a client 1810 and a server 1830 may be in the form of a data packet transmitted between two or more computer processes.

The system 1800 includes a communication framework 1850 that can be employed to facilitate communications between the client(s) 1810 and the server(s) 1830. The client(s) 1810 are operatively connected to one or more client data store(s) 1820 that can be employed to store information local to the client(s) 1810. Similarly, the server(s) 1830 are operatively connected to one or more server data store(s) 1840 that can be employed to store information local to the servers 1830.

It is to be noted that aspects or features of this disclosure can be exploited in substantially any wireless telecommunication or radio technology, e.g., Wi-Fi; Bluetooth; Worldwide Interoperability for Microwave Access (WiMAX); Enhanced General Packet Radio Service (Enhanced GPRS); Third Generation Partnership Project (3GPP) Long Term Evolution (LTE); Third Generation Partnership Project 2 (3GPP2) Ultra Mobile Broadband (UMB); 3GPP Universal Mobile Telecommunication System (UMTS); High Speed Packet Access (HSPA); High Speed Downlink Packet Access (HSDPA); High Speed Uplink Packet Access (HSUPA); GSM (Global System for Mobile Communications) EDGE (Enhanced Data Rates for GSM Evolution) Radio Access Network (GERAN); UMTS Terrestrial Radio Access Network (UTRAN); LTE Advanced (LTE-A); etc. Additionally, some or all of the aspects described herein can be exploited in legacy telecommunication technologies, e.g., GSM. In addition, mobile as well non-mobile networks (e.g., the Internet, data service network such as internet protocol television (IPTV), etc.) can exploit aspects or features described herein.

While the subject matter has been described above in the general context of computer-executable instructions of a computer program that runs on a computer and/or computers, those skilled in the art will recognize that this disclosure also can or may be implemented in combination with other program modules. Generally, program modules include routines, programs, components, data structures, etc. that perform particular tasks and/or implement particular abstract data types. Moreover, those skilled in the art will appreciate that the inventive methods may be practiced with other computer system configurations, including single-processor or multiprocessor computer systems, mini-computing devices, mainframe computers, as well as personal computers, hand-held computing devices (e.g., PDA, phone), microprocessor-based or programmable consumer or industrial electronics, and the like. The illustrated aspects may also be practiced in distributed computing environments where tasks are performed by remote processing devices that are linked through a communications network. However, some, if not all aspects of this disclosure can be practiced on stand-alone computers. In a distributed computing environment, program modules may be located in both local and remote memory storage devices.

As used in this application, the terms "component," "system," "platform," "interface," and the like, can refer to and/or can include a computer-related entity or an entity related to an operational machine with one or more specific functionalities. The entities disclosed herein can be either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers.

In another example, respective components can execute from various computer readable media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form.

As used herein, the terms "example" and/or "exemplary" are utilized to mean serving as an example, instance, or illustration. For the avoidance of doubt, the subject matter disclosed herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

Various aspects or features described herein can be implemented as a method, apparatus, system, or article of manufacture using standard programming or engineering techniques. In addition, various aspects or features disclosed in this disclosure can be realized through program modules that implement at least one or more of the methods disclosed herein, the program modules being stored in a memory and executed by at least a processor. Other combinations of hardware and software or hardware and firmware can enable or implement aspects described herein, including a disclosed method(s). The term "article of manufacture" as used herein can encompass a computer program accessible from any computer-readable device, carrier, or storage media. For example, computer readable storage media can include but are not limited to magnetic storage devices (e.g., hard disk, floppy disk, magnetic strips...), optical discs (e.g., compact disc (CD), digital versatile disc (DVD), blu-ray disc (BD) ...), smart cards, and flash memory devices (e.g., card, stick, key drive...), or the like.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor may also be implemented as a combination of computing processing units.

In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory and/or memory components described herein can be either volatile memory or nonvolatile memory, or can include both volatile and nonvolatile memory.

By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or methods herein are intended to include, without being limited to including, these and any other suitable types of memory.

It is to be appreciated and understood that components, as described with regard to a particular system or method, can include the same or similar functionality as respective components (e.g., respectively named components or similarly named components) as described with regard to other systems or methods disclosed herein.

What has been described above includes examples of systems and methods that provide advantages of this disclosure. It is, of course, not possible to describe every conceivable combination of components or methods for purposes of describing this disclosure, but one of ordinary skill in the art may recognize that many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

Various aspects and embodiments of the present invention are defined by the following numbered clauses:
1. A system, comprising:
   a memory storing computer executable components; and
   a processor configured to execute the following computer executable components stored in the memory:
      a monitoring component that monitors and analyzes data associated with one or more assets;
      a catalog component that manage analytics associated with the one or more assets, wherein the catalog component manages a set of models for the one or more assets;
      a model suite component that selects a subset of models from the set of models; and
      a model processing/learning component that process the subset of models and performs learning associated with the subset of models to predict a health state for the one or more assets.
2. The system of clause 1, wherein the model suite component defines one or more models for one or more features of the one or more assets.
3. The system of any preceding clause, wherein the model processing/learning component performs one or more machine learning techniques to predict the health state for the one or more assets.
4. The system of any preceding clause, wherein the model processing/learning component learns one or more features related to the subset of models.
5. The system of any preceding clause, wherein the computer executable components further comprise:
   a fly forward component that executes a forecasting model to determine a deterministic forecast and/or a probabilistic forecast for the one or more assets.
6. The system of any preceding clause, wherein the fly forward component determines one or more predicted operational characteristics for the one or more assets.
7. The system of any preceding clause, wherein the fly forward component employs a set of historical parameters for the one or more assets to forecast one or more future operational characteristics for the one or more assets.
8. The system of any preceding clause, wherein the computer executable components further comprise:
   an inspector aggregation component that aggregates the subset of models to determine an optimized model for the one or more assets.
9. The system of any preceding clause, wherein the computer executable components further comprise:
   a resource map aggregation component that determines a set of properties associated with aggregation of the subset of models to facilitate service of at least one asset from the one or more assets.
10. A method, comprising:
   monitoring, by a system comprising a processor, data associated with one or more assets;
   analyzing, by the system, the one or more assets;
   managing, by the system, analytics associated with the one or more assets, comprising generating a set of models for the one or more assets;
   selecting, by the system, a subset of models from the set of models; and
   performing, by the system, learning associated with the subset of models to predict a health state for the one or more assets.
11. A method of any preceding clause, further comprising:
   processing, by the system, the subset of models.
12. A method of any preceding clause, further comprising:
   executing, by the system, a forecasting model to determine a deterministic forecast and/or a probabilistic forecast for the one or more assets.
13. A method of any preceding clause, further comprising:
   aggregating, by the system, the subset of models to determine an optimized model for the one or more assets.
14. A method of any preceding clause, further comprising:
   determining, by the system, a set of properties associated with aggregation of the subset of models to facilitate service of at least one asset from the one or more assets.
15. A method of any preceding clause, further comprising:
   defining, by the system, one or more models for one or more features of the one or more assets.
16. A computer readable storage device comprising instructions that, in response to execution, cause a system comprising a processor to perform operations, comprising:
   analyzing one or more assets;
   managing analytics associated with the one or more assets, comprising generating a set of models for the one or more assets;
   selecting a subset of models from the set of models; and
   performing learning associated with the subset of models to predict a health state for the one or more assets.
17. A computer readable storage device of any preceding clause, wherein the operations further comprise:
   processing the subset of models.
18. A computer readable storage device of any preceding clause, wherein the operations further comprise:
   executing a forecasting model to determine a deterministic forecast and/or a probabilistic forecast for the one or more assets.
19. A computer readable storage device of any preceding clause, wherein the operations further comprise:
   aggregating the subset of models to determine an optimized model for the one or more assets.
20. A computer readable storage device of any preceding clause, wherein the operations further comprise:
   determining a set of properties associated with aggregation of the subset of models to facilitate service of at least one asset from the one or more assets.

## Claims

1. A system, comprising:
a memory storing computer executable components; and
a processor configured to execute the following computer executable components stored in the memory:
a monitoring component that monitors and analyzes data associated with one or more assets;
a catalog component that manage analytics associated with the one or more assets, wherein the catalog component manages a set of models for the one or more assets;
a model suite component that selects a subset of models from the set of models; and
a model processing/learning component that process the subset of models and performs learning associated with the subset of models to predict a health state for the one or more assets.

2. The system of claim 1, wherein the model suite component defines one or more models for one or more features of the one or more assets.

3. The system of either of claim 1 or 2, wherein the model processing/learning component performs one or more machine learning techniques to predict the health state for the one or more assets.

4. The system of any one of the preceding claims, wherein the model processing/learning component learns one or more features related to the subset of models.

5. The system of any one of the preceding claims, wherein the computer executable components further comprise:
a fly forward component that executes a forecasting model to determine a deterministic forecast and/or a probabilistic forecast for the one or more assets.

6. The system of claim 5, wherein the fly forward component determines one or more predicted operational characteristics for the one or more assets.

7. The system of either of claim 5 or 6, wherein the fly forward component employs a set of historical parameters for the one or more assets to forecast one or more future operational characteristics for the one or more assets.

8. The system of any one of the preceding claims, wherein the computer executable components further comprise:
an inspector aggregation component that aggregates the subset of models to determine an optimized model for the one or more assets.

9. The system of claim 3 or any claim dependent thereon, wherein the computer executable components further comprise:
a resource map aggregation component that determines a set of properties associated with aggregation of the subset of models to facilitate service of at least one asset from the one or more assets.

10. A method, comprising:
monitoring, by a system comprising a processor, data associated with one or more assets;
analyzing, by the system, the one or more assets;
managing, by the system, analytics associated with the one or more assets, comprising generating a set of models for the one or more assets;
selecting, by the system, a subset of models from the set of models; and
performing, by the system, learning associated with the subset of models to predict a health state for the one or more assets.

11. A method of claim 10, further comprising:
processing, by the system, the subset of models.

12. A method of either of claim 10 or 11, further comprising:
executing, by the system, a forecasting model to determine a deterministic forecast and/or a probabilistic forecast for the one or more assets.

13. A method of any of claims 10 to 12, further comprising:
aggregating, by the system, the subset of models to determine an optimized model for the one or more assets.

14. A method of claim 13, further comprising:
determining, by the system, a set of properties associated with aggregation of the subset of models to facilitate service of at least one asset from the one or more assets.

15. A method of any of claims 10 to 14, further comprising:
defining, by the system, one or more models for one or more features of the one or more assets.

16. A computer readable storage device comprising instructions that, in response to execution, cause a system comprising a processor to perform operations, comprising:
analyzing one or more assets;
managing analytics associated with the one or more assets, comprising generating a set of models for the one or more assets;
selecting a subset of models from the set of models; and
performing learning associated with the subset of models to predict a health state for the one or more assets.
